(19) Europäisches Patentamt
European Patent Office
Office européen des brevets

(11) EP 2 145 042 B2

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**06.10.2021 Patentblatt 2021/40**

(45) Hinweis auf die Patenterteilung:
**17.01.2018 Patentblatt 2018/03**

(21) Anmeldenummer: **08717984.2**

(22) Anmeldetag: **19.03.2008**

(51) Int Cl.:
***D06F 58/20*** *(2006.01)* ***B65D 83/14*** *(2006.01)*
***C11D 3/50*** *(2006.01)*

(86) Internationale Anmeldenummer:
**PCT/EP2008/053253**

(87) Internationale Veröffentlichungsnummer:
**WO 2008/135306 (13.11.2008 Gazette 2008/46)**

(54) **TEXTILBEDUFTUNG**

TEXTILE SCENTING

PROCÉDÉ PERMETTANT DE PARFUMER DES TEXTILES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **07.05.2007 DE 102007021795**

(43) Veröffentlichungstag der Anmeldung:
**20.01.2010 Patentblatt 2010/03**

(73) Patentinhaber: **Henkel AG & Co. KGaA**
**40589 Düsseldorf (DE)**

(72) Erfinder:
- **STRIEPLING, Gert-Lothar**
  **40591 Düsseldorf (DE)**
- **BAUER, Andreas**
  **41564 Kaarst (DE)**
- **HLOUCHA, Matthias**
  **50677 Köln (DE)**
- **GERKE, Thomas**
  **40627 Düsseldorf (DE)**
- **VELDMAN, Gerard**
  **41372 Niederkrüchten (DE)**

(56) Entgegenhaltungen:
**EP-A- 0 676 497** **WO-A1-01/60961**
**WO-A1-01/90294** **WO-A1-03/087465**
**WO-A1-2005/035704** **CA-A1- 2 080 108**
**DE-A1- 19 548 016** **DE-A1- 19 630 176**
**DE-A1- 19 643 840** **US-A- 5 288 423**

- **Anonymous: "Material Safety Data Sheet BRIJ 52 MSDS", ScienceLab.com, 21 May 2013 (2013-05-21),**
- **Anonymous: "TS-800 Trigger Sprayer", Calmar, October 2001 (2001-10),**
- **Valentina Preziosi et al: "Phase Inversion Emulsification", Chemical Engineering Transactions, Vol 32, 2013**
- **Steareth-21 data sheet**
- **Wadle A. et al: "Influence of the microemulsion phase structure on the phase inversion temperature emulsification of polar oils", Colloids and Surfaces A: Physlochemical and Engineering Aspects, 76 (1993) 51-57**

EP 2 145 042 B2

**Beschreibung**

Die vorliegende Erfindung betrifft eine parfümhaltige PIT-Emulsion zur Textilbeduftung, welche eine Phaseninversionstemperatur im Bereich 35-80 °C aufweist. Ferner betrifft sie ein Verfahren zur Wäschebeduftung in einem Textiltrocknungsverfahren unter Gebrauch der PIT-Emulsion. Ferner betrifft sie ein Verfahren zur Raumbeduftung unter Gebrauch der PIT-Emulsion. Ferner betrifft sie ein Kit aus Textilwaschmittel sowie einer vorgenannten PIT-Emulsion in einem Behälter mit Sprühventil, der die PIT-Emulsion enthält.

PIT Formulierungen sind aus dem Gebiet der kosmetischen und dermatologischen Lichtschutzformulierungen bekannt zum Beispiel offenbart die DE-A-195 48 016 O/W-Emulsionen, enthaltend

- eine Wasserphase.
- gegebenenfalls übliche, in Wasser lösliche oder dispergierbare Substanzen.
- eine Ölphase, in welcher eine in Ölkomponenten an sich schwerlösliche LJV-Filtersubstanz, insbesondere 4,4',4"-(1,3,5-Triazin-2,4,6-triltriimino)-tris-benzoesäure-tris(2-etfiylfiexylester) und/oder die 2-Phenylbenzimidazol-5-sulfonsäure bzw. ihre Salze in gelöster Form vorliegt sowie mindestens einen Emulgator (Emulgator A), gewählt aus der Gruppe der Emulaatoren mit folgenden Eigenschaften
- ihre Lipophilie ist entweder abhängig vom pH-Wert, dergestalt dass durch Erhöhung oder Senkung des pH-Wertes die Lipophili zunimmt oder abnimmt, wobei unerheblich ist, welche der beiden Möglichkeiten der Änderung der Lipophilie durch die Erhöhuna bzw.Senkung des pH-Wertes bewirkt wird, und/oder
- ihre Lipophilie ist abhängig von der Temperatur, dergestalt, dass die Lipophilie mit steigender Temperatur zunimmt und der Hydrophilie mit sinkender Temperatur zunimmt ferner gegebenenfalls weitere in der ölphase lösliche oder dispergierbare Substanzen.

Bei der Textilwäsche verfolgt der Verbraucher im allgemeinen nicht nur das Ziel, die Wäsche aus hygienischen Gründen von Anschmutzungen zu befreien, sondern er wünscht sich auch, daß die Textilien nach der Wäsche gut riechen mögen. Aus diesem Grunde und um den Eigengeruch des Textilwaschmittels zu überdecken, enthalten die meisten kommerziell verfügbaren Textilwaschmittel Riechstoffe.
Beim Einsatz herkömmlicher Waschmittel bleibt nach dem Waschen jedoch oft nur ein verhältnismäßig schwacher Duft auf der Wäsche zurück, insbesondere dann, wenn ein Wäschetrockner benutzt wird.
Eine Möglichkeit, zu einer stärkeren Wäschebeduftung zu gelangen, liegt in der Verwendung von parfümierten Weichspülern. Deren Einsatz führt zu einer verbesserten Textilbeduftung. Nachteilig am Weichspülereinsatz bleibt jedoch die resultierende, reduzierte Wasseraufnahmefähigkeit der mit Weichspülern behandelten Wäsche.

Aufgabe der vorliegenden Erfindung war es daher, ein Mittel bereitzustellen, welches dem Verbraucher ermöglicht, im Rahmen der herkömmlichen maschinellen Textilbehandlung zu einer verbesserten Textilbeduftung zu gelangen.

Gelöst wird diese Aufgabe vom Gegenstand der Erfindung, nämlich einer parfümhaltigen PIT-Emulsion zur Textilbeduftung, welche eine Phaseninversionstemperatur im Bereich 35-80 °C, vorteilhafterweise 40-75 °C, vorzugsweise 45-70 °C, insbesondere im Bereich 50-65 °C aufweist, enthaltend

a) Niotenside in Mengen von 0,1-25 Gew.-%, vorzugsweise 1-15 Gew.-%, insbesondere 2-10 Gew.-%,
b) Coemulgator in Mengen von 0,1-10 Gew.-%, vorzugsweise 0,1-5 Gew.-%, insbesondere 1-4 Gew.-%,
c) Parfümöl in Mengen von 5-20 Gew.-%, wobei das Parfümöl zu mindestens 5 Gew.-% aus Riechstoffen mit einem Siedepunkt über 250 °C und einem logP-Wert von ≥ 3 besteht,
d) Wasser,

Gew.-% bezogen auf die gesamte PIT-Emulsion aufweist.

Eine solche PIT-Emulsion kann vom Verbraucher zur Wäschebeduftung in handelsüblichen automatischen (vorzugsweise elektrischen) Textiltrockneren, vorzugsweise durch Versprühen, eingesetzt werden und ermöglicht auf diesem Wege eine hervorragende und überaus langanhaltende Textilbeduftung. Sowohl Dauerhaftigkeit wie Intensität als auch Gefallen des resultierenden Dufteindruckes sind superb. Da Textilien, die im Textiltrockner getrocknet werden, infolge der intensiven, die Fasern auflockernden Bewegungen im Trockner keine Weichspülerbehandlung benötigen, ermöglicht die vorliegende Erfindung durch die Bereitstellung der erfindungsgemäßen PIT-Emulsion zumindest dieselben Vorzüge, wie sie auch bei der Anwendung von Textilweichspülern erreicht werden können, ohne deren Nachteile, wie z.B. die verminderte Wasseraufnahmefähigkeit der Textilien, in Kauf nehmen zu müssen. Hinsichtlich des erzielbaren Dufteindruckes (Gefallen/Intensität/Dauerhaftigkeit) wird die Leistung von Textilweichspülern sogar übertroffen.

Die erfindungsgemäßen PIT-Emulsionen (PIT =Phaseninversionstemperatur), also O/W-Emulsionen, sind besonders feindispers und zeichnen sich durch Langzeit-Stabilität aus. Verfahren zur Herstellung feindisperser und langzeitstabiler O/W-Emulsionen mittels der Phaseninversionstechnik sind an sich bekannt. Die Herstellung einer erfindungsgemäßen PIT-Emulsion funktioniert beispielsweise wie folgt. Man stellt eine W/O-Emulsion bei einer Temperatur

her, die bei oder über der Phaseninversionstemperatur des Systems liegt, d.h. der Temperatur, bei der das Gleichgewicht zwischen den hydrophilen und lipophilen Eigenschaften des Emulgators oder der Emulgatoren, die verwendet werden, erreicht ist; bei höherer Temperatur (> PIT) handelt es sich also um eine Emulsion vom Wasser-in-Öl-Typ und beim Abkühlen auf die Phaseninversionstemperatur kehrt sich die Emulsion um und wird eine Emulsion vom Typ Öl-in-Wasser, wobei diese Umwandlung über einen Coemulsionszustand verläuft. Mit dieser Technik können besonders feindisperse O/W-Emulsionen erhalten werden, bei denen die mittlere Grösse der Tröpfchen, die die Fettphase (Ölkörper) bilden, in sehr engen Bereichen liegt, nämlich vorzugsweise im Bereich von 50 bis 1000 nm, vorteilhafterweise kleiner als 400 nm, insbesondere im Bereich von 100-300 nm. Dies entspricht einer bevorzugten Ausführungsform der Erfindung. Erfindungsgemäss können z.B. solche PIT-Emulsionen bevorzugt sein, die einen mittleren Teilchendurchmesser von etwa 200 nm aufweisen. Dies entspricht einer bevorzugten Ausführungsform der Erfindung.

Man kann eine erfindungsgemäße PIT-Emulsion auch herstellen, indem man eine zunächst wie üblich hergestellte Emulsion nachträglich auf eine Temperatur erhitzt, die innerhalb oder oberhalb des Phaseninversions-Temperaturbereichs liegt und danach abkühlt.

Es ist auch möglich, ein wasserfreies oder wasserarmes Konzentrat bei der PhaseninversionsTemperatur mit heißem oder kaltem Wasser zu verdünnen (Heiß-Heiß- oder Heiß-Kalt-Verfahren), um so zu einer erfindungsgemäßen PIT-Emulsion zu gelangen.

Die Phaseninversionstemperatur des Systems, welche erfindungsgemäß im Bereich 35-80 °C liegt, kann üblicherweise dadurch bestimmt werden, daß man eine Probe, der auf übliche Weise hergestellten Emulsion, erhitzt und unter Verwendung eines Leitfähigkeitsmessgerätes die Temperatur bestimmt, bei der die Leitfähigkeit stark abnimmt. Die spezifische Leitfähigkeit der zunächst vorhandenen O/W-Emulsion nimmt dabei in der Regel über einen Temperaturbereich von üblicherweise mehreren °C, z.B. 2 bis 8 °C, stark ab, beispielsweise von ursprünglich mehr als 1 mS/cm auf Werte unterhalb von 0,1 mS/cm ab. Der Temperaturbereich kann sich beispielsweise auch von 5 bis 15 °C erstrecken. Entscheidend ist, das in einem Temperaturbereich die Leitfähigkeit stark abnimmt. Dieser Bereich entspricht dann dem Phaseninversions-Temperaturbereich.

Weitere Einzelheiten zu PIT-Emulsionen sind einer Vielzahl von Druckschriften zu entnehmen, für die stellvertretend die Veröffentlichungen in Angew. Chem. 97, 655-669 (1985) und Adv. Collold Interface Sci 58, 119-149 (1995) genannt werden.

Die Niotenside dienen als Emulgatoren. In einer bevorzugten Ausführungsform enthält eine erfindungsgemäße PIT-Emulsion als Niotenside alkoxylierte Fettalkohole, Alkylpolyglucoside und/oder Fettsäurepartialglyceride.

Die Menge des Wassers liegt üblicherweise bei > 30 Gew.-%, vorzugsweise > 40 Gew.-%, vorteilhafterweise > 50 Gew.-% und insbesondere bei > 60 Gew.-%. Es sind auch Wassermengen > 70 Gew.-% möglich, Gew.-% jeweils bezogen auf die gesamte PIT-Emulsion.

Der Ölkörper (Fettphase) der erfindungsgemäßen PIT-Emulsion kann neben dem Parfümöl auch weitere Ölkomponenten enthalten.

Es eignen sich insbesondere polare Ölkomponenten mit ein oder mehreren Estergruppen im Molekül, aber auch Mischungen solcher polarer Ölkomponenten mit kleineren Mengen unpolarer Kohlenwasserstoffe.

Als polare Ölkomponenten eignen sich vor allem Mono- und Diester der allgemeinen Formel (I), (II) und (III)

(I) $R^1\text{-COOR}^2$

(II) $R^2\text{-OOC-}R^3\text{-COOR}^2$

(III) $R^1\text{-COO-}R^3\text{-OOC-}R^1$

worin $R^1$ eine Alkylgruppe mit 8 bis 22 C-Atomen und $R^2$ eine Alkylgruppe mit 3 bis 22 C-Atomen und $R^3$ Alkylengruppen mit 2 bis 16 C-Atomen bedeuten, mit der Maßgabe, daß die Gesamtzahl der C-Atome in den Verbindungen (I) bis (III) mindestens 11 beträgt.

Unter den Mono- und Diestern dieser Art kommt den bei Raumtemperatur (20 °C) flüssigen Produkten die größte Bedeutung zu. Geeignete Monoester (I) sind z.B. die Isopropylester von Fettsäuren mit 12 bis 22 C-Atomen, wie z.B. Isopropylmyristat, Isopropylpalmitat, Isopropylstearat, Isopropyloleat. Andere geeignete Monoester sind z.B. n-Butylstearat, n-Hexyllaurat, n-Decyloleat, Isooctylstearat, Isononylpalmitat, Isononyl-isononanoat, 2-Ethylhexyl-palmitat, 2-Ethylhexyl-laurat, 2-Hexyldecyl-stearat, 2-Octyldodecyl-palmitat, Oleyloleat, Oleylerucat, Erucyloleat sowie Ester, die aus technischen aliphatischen Alkoholgemischen und technischen aliphatischen Carbonsäuren erhältlich sind, z.B. Ester aus gesättigten und ungesättigten Fettalkoholen mit 12 bis 22 C-Atomen und gesättigten und ungesättigten Fettsäuren mit 12 bis 22 C-Atomen, wie sie aus tierischen und pflanzlichen Fetten zugänglich sind. Geeignet sind auch natürlich vorkommende Monoester- bzw. Wachsester-Gemische, wie sie z.B. im Jojobaöl oder im Spermöl vorliegen.

Geeignete Dicarbonsäureester (II) sind z.B. Di-n-butyl-adipat, Di-n-butyl-sebacat, Di-(2-ethylhexyl)-adipat, Di-(2-hexyldecyl)-succinat und Di-isotridecyl-acelaat. Geeignete Diolester (III) sind z.B. Ethylenglykol-dioleat, Ethylenglykol-di-isotridecanoat, Propylenglykol-di-(2-ethylhexanoat), Propylenglykol-di-isostearat, Propylenglykol-di-pelargonat, Butandiol-di-isostearat und Neopentylglykol-di-caprylat.

Für den Ölkörper gut geeignet sind ferner Ester von drei- und mehrwertigen Alkoholen, insbesondere pflanzliche Triglyceride, z.B. Olivenöl, Mandelöl, Erdnußöl, Sonnenblumenöl oder auch die Ester des Pentaerythrits mit z.B. Pelargonsäure oder Ölsäure.

Als Fettsäuretriglyceride können natürliche, pflanzliche Öle, z.B. Olivenöl, Sonnenblumenöl, Sojaöl, Erdnußöl, Rapsöl, Mandelöl, Palmöl, aber auch die flüssigen Anteile des Kokosöls oder des

Palmkernöls sowie tierische Öle, wie z.B. Klauenöl, die flüssigen Anteile des Rindertalges oder auch synthetische Triglyceride, wie sie durch Veresterung von Glycerin mit Fettsäuren mit 8 - 22 C-Atomen erhalten werden, z.B. Triglyceride von Caprylsäure-Caprinsäure-Gemischen, Triglyceride aus technischer Ölsäure oder aus Palmitinsäure-Ölsäure-Gemischen, zur Anwendung kommen.

Bevorzugt eignen sich solche Mono- und Diester und Triglyceride als Ölkomponenten, die bei Normaltemperatur von 20 °C flüssig sind, es können aber auch höherschmelzende Fette und Ester, die den angegebenen Formeln entsprechen, in solchen Mengen mitverwendet werden, daß die Mischung der Ölkomponenten bei Normaltemperatur flüssig bleibt.

Die Ölkomponente kann auch Kohlenwasserstofföle, vorzugsweise in untergeordneten Mengen bis zu maximal 25 Gew.-%, bezogen auf die Ölkomponente, enthalten. Geeignete Kohlenwasserstoffe sind vor allem Paraffinöle und synthetisch hergestellte Kohlenwasserstoffe, z.B. flüssige Polyolefine oder definierte Kohlenwasserstoffe, z.B. Alkylcyclohexane, wie z.B. das 1.3-Diisooctylcyclohexan.

Die Ölkomponente kann auch Siliconöle, vorzugsweise lineare Polydimethylsiloxane und/oder Poly(methylphenylsiloxane) enthalten. Bevorzugte Siliconöle weisen relative Molmassen im Bereich von 1000-150000 auf. Sind Siliconöle enthalten, so liegt eine bevorzugte Ausführungsform der Erfindung vor.

Als Niotenside eignen sich insbesondere solche Substanzen, welche eine lipophile, bevorzugt lineare Alkyl- oder Acylgruppe und eine hydrophile, aus niedermolekularen Glycol-, Glucose- und Polyolethern gebildete Gruppe aufweisen.

Als Niotenside eignen sich vor allem Ethylenoxidanlagerungsprodukte an Fettalkohole mit vorzugsweise 16 bis 22 C-Atomen. Derartige Produkte sind handelsüblich. Die technischen Produkte stellen üblicherweise Gemische homologer Polyglycolether der Ausgangsfettalkohole dar, deren mittlerer Oxethylierungsgrad der angelagerten Molmenge an Ethylenoxid entspricht. Auch Ethylenoxidanlagerungsprodukte an Partialester aus einem Polyol mit 3 bis 6 C-Atomen und Fettsäuren mit 14 bis 22 C-Atomen können verwendet werden. Solche Produkte werden z.B. durch Ethoxylierung von Fettsäurepartialglyceriden oder von Mono- und Di-Fettsäureestern des Sorbitans, z.B. von Sorbitanmonostearat oder Sorbitansesquioleat hergestellt. Erfindungsgemäß besonders geeignete Niotenside weisen einen HLB-Wert von 10 bis 18 aufweisen. Sind solche Niotenside enthalten, so liegt eine bevorzugte Ausführungsform der Erfindung vor. Unter dem HLB-Wert (Hydrophil-Lipophil-Balance) soll ein Wert verstanden werden, der errechnet werden kann gemäß

$$\mathrm{HLB} = \frac{100 - L}{5}$$

worin L der Gewichtsanteil der lipophilen Gruppen, d. h. der Fettalkyl- oder Fettacylgruppen in Prozent in den Ethylenoxidanlagerungsprodukten ist.

Bevorzugt eignen sich Fettalkoholpolyglykolether der allgemeinen Formel (IV)

$$R^4\text{-}(O\text{-}CH_2\text{-}CH_2)_n\text{-}OH \qquad \text{(IV)}$$

in der $R^4$ einen gesättigten oder ungesättigten, geradkettigen oder verzweigten Kohlenwasserstoffrest mit 8 bis 22 C-Atomen, vorzugsweise 12 bis 22 C-Atomen und n eine ganze Zahl von 10 bis 50, vorzugsweise von 10 bis 30, bedeutet, sowie Anlagerungsprodukte von 4 bis 20 Mol Ethylenoxid an ein oder mehrere Fettsäurepartialglyceride.

Unter Fettsäurepartialglyceriden von gesättigten oder ungesättigten Fettsäuren mit 10 bis 20 C-Atomen sind dabei technische Gemische von Fettsäuremono-, di- und triglyceriden zu verstehen, die durch Veresterung von 1 Mol Glycerin mit 1 bis 2 Mol einer ($C_{10-20}$)-Fettsäure oder durch Umesterung von 1 Mol eines ($C_{10-20}$)-Fettsäuretriglycerids, z.B. von Rindertalg, Schweineschmalz, Palmöl, Sonnenblumenöl oder Sojaöl mit 0,5 bis 2 Mol Glycerin erhalten werden. Handelsüblich sind zwei Typen von Partialglyceriden. Partialglyceride des Typs I enthalten 35 bis 60 % Monoglyceride, 35 bis 50 % Diglyceride und 1 bis 20 % Triglyceride. Partialglyceride des Typs II werden durch Molekulardestillation aus solchen des Typs I hergestellt und enthalten 90 bis 96 % Monoglyceride, 1 bis 5 % Diglyceride und weniger als 1 % Triglyceride. Die erfindungsgemäß einsetzbaren Fettsäurepartialglyceride sollen vorzugsweise 35 bis 96 % Monoglyceride, 1 bis 50 % Diglyceride und 0,1 bis 20 % Triglyceride enthalten.

Bevorzugt geeignet sind Anlagerungsprodukte von 8 bis 12 Mol Ethylenoxid an gesättigte Fettalkohole mit 16 bis 22 C-Atomen oder mit 18 bis 22 C-Atomen.

Die erfindungsgemäßen PIT-Emulsionen können vorzugsweise Alkylpolyglucoside enthalten.

Diese können nach den einschlägigen Verfahren der präparativen organischen Chemie erhalten werden. Hier liegt ein umfangreiches Schrifttum vor.

Die Alkylpolyglucoside können sich von Aldosen bzw. Ketosen mit 5 oder 6 Kohlenstoffatomen, vorzugsweise der Glucose ableiten.

Bevorzugt einsetzbare Alkylpolyglucoside, $RO-[G]_p$, werden nun genauer beschrieben:
In der Formel $RO-[G]_p$ steht g für eine Glykoseeinheit mit 5 oder 6 C-Atomen, vorzugsweise für Glucose. R kann ein Alkylrest sein. Der Alkylrest R kann sich von primären gesättigten Alkoholen ableiten. Typische Beispiele sind Butanol-1, Capron-, Önanth-, Capryl-, Pelargon-, Caprinalkohol, Undecanol-1, Laurylalkohol, Tridecanol-1, Myristylalkohol, Pentadecanol-1, Cetylalkohol, Palmitylakohol, Heptadecanol-1, Stearylalkohol, Isostearylalkohol, Nonadecanol-1, Arachidylalkohol, Heneicosanol-1, und Behenylalkohol sowie deren technische Mischungen.
R kann ein Alkylenrest sein. Der Alkenylrest R kann sich auch von primären ungesättigten Alkoholen ableiten. Typische Beispiele ungesättigter Alkohole sind Undecen-1-ol, Oleylalkohol, Elaidylalkohol, Ricinolalkohol, Linoleylalkohol, Linolenylalkohol, Gadoleylalkohol, Arachidonalkohol, Erucaalkohol, Brassidylalkohol, Palmoleylalkohol, Petroselinylalkohol, Arachylalkohol, sowie deren technische Gemische.
Bevorzugt werden Alkyl- bzw. Alkenylreste R, die sich von primären Alkoholen mit 6 bis 16 Kohlenstoffatomen ableiten. Insbesondere geeignet sind Alkylpolyglucoside der Kettenlänge C8-C10, die z.B. als Vorlauf bei der destillativen Auftrennung von technischem C8-C18-Kokosfettalkohol anfallen und mit einem Anteil von weniger als 6 Gew.-% C12-Alkohol verunreinigt sein können sowie Alkylpolyglucoside auf Basis technischer C9/11-Oxoalkohole.
Der Alkyl- bzw. Alkenylrest R kann sich ferner auch von primären Alkoholen mit 12 bis 14 Kohlenstoffatomen ableiten.
Die Indexzahl p in der allgemeinen Formel $RO-[G]_p$ gibt den Oligomerisierungsgrad, d.h. die Verteilung von Mono- und Oligoglykosiden an und steht für eine Zahl zwischen 1 und 10. Während p in einer gegebenen Verbindung stets ganzzahlig sein muss und hier insbesondere die Werte p = 1 bis 3 annehmen kann, ist der Wert p für ein bestimmtes Alkylpolyglucosid eine analytisch ermittelte rechnerische Größe, die meistens eine gebrochene Zahl darstellt. Vorzugsweise werden Alkylpolyglucoside mit einem mittleren Oligomerisierungsgrad p von 1,1 bis 2,0 eingesetzt. Aus anwendungstechnischer Sicht sind solche Alkylpolyglucoside bevorzugt, deren Oligomerisierungsgrad kleiner als 2,0 ist und insbesondere zwischen 1,2 und 1,7 liegt. Bevorzugt werden Alkylpolyglucoside der Formel $RO-[G]_p$ eingesetzt, wobei p für Zahlen von 1 bis 3 und R für einen Alkylrest mit 6 bis 16 Kohlenstoffatomen steht.

Zusätzlich zum Niotensid enthält eine erfindungsgemäße PIT-Emulsion auch Coemulgator. Als Coemulgatoren sind insbesondere solche vom Typ der Fettalkohole mit 16 bis 22 C-Atomen, z.B. Cetylalkohol, Stearylalkohol, Arachidylalkohol oder Behenylalkohol oder Gemische dieser Alkohole geeignet, wie sie bei der technischen Hydrierung von pflanzlichen und tierischen Fettsäuren mit 16 bis 22 C-Atomen oder der entsprechenden Fettsäuremethylester erhalten werden. Weiterhin eignen sich als Coemulgatoren Partialester aus einem Polyol mit 3 bis 6 C-Atomen und Fettsäuren mit 14 bis 22 C-Atomen. Solche Partialester sind z.B. die Monoglyceride von Palmitin- und/oder Stearinsäure, die Sorbitanmono-und/oder -diester von Myristinsäure, Palmitinsäure, Stearinsäure oder von Mischungen dieser Fettsäuren, die Monoester aus Trimethylolpropan, Erythrit oder Pentaerythrit und gesättigten Fettsäuren mit 14 bis 22 C-Atomen. Als Monoester werden auch die technischen Monoester verstanden, die durch Veresterung von 1 Mol Polyol mit 1 Mol Fettsäure erhalten werden und die ein Gemisch aus Monoester, Diester und unverestertem Polyol darstellen.

Besonders gut eignen sich beispielsweise Cetylalkohol, Stearylalkohol oder ein Glycerin-, Sorbitan-oder Trimethylolpropan-Monoester einer Fettsäure mit 14 bis 22 C-Atomen oder Gemische dieser Stoffe.

Eine besonders bevorzugte erfindungsgemäße PIT-Emulsionen wird im Beispielteil exemplarisch genannt.

Ein wesentlicher Bestandteil der erfindungsgemäßen PIT-Emulsionen sind Parfümöle. Als Parfümöle (Riechstoffe, Duftstoffe) können einzelne Riechstoffverbindungen, z.B. die synthetischen Produkte vom Typ der Ester, Ether, Aldehyde, Ketone, Alkohole und Kohlenwasserstoffe verwendet werden. Bevorzugt werden jedoch Mischungen verschiedener Riechstoffe verwendet, die gemeinsam eine ansprechende Duftnote erzeugen. Solche Parfümöle können auch natürliche Riechstoffgemische enthalten, wie sie aus pflanzlichen Quellen zugänglich sind.

Ein einsetzbares Parfümöl kann einzelne Riechstoffverbindungen, z.B. die synthetischen Produkte vom Typ der Ester, Ether, Aldehyde, Ketone, Alkohole und Kohlenwasserstoffe enthalten. Riechstoffverbindungen vom Typ der Ester sind z.B. Benzylacetat, Phenoxyethylisobutyrat, p-tert.-Butylcyclohexylacetat, Linalylacetat, Dimethylbenzylcarbinylacetat (DMBCA), Phenylethylacetat, Benzylacetat, Ethylmethylphenylglycinat, Allylcyclohexylpropionat, Styrallylpropionat, Benzylsalicylat, Cyclohexylsalicylat, Floramat, Melusat und Jasmecyclat. Zu den Ethern zählen beispielsweise Benzylethylether und Ambroxan , zu den Aldehyden z.B. die linearen Alkanale mit 8 - 18 C-Atomen, Citral, Citronellal, Citronellyloxyacetaldehyd, Cyclamenaldehyd, Lilial und Bourgeonal, zu den Ketonen z.B. die Jonone, $\propto$-Isomethylionon und Methylcedrylketon, zu den Alkoholen Anethol, Citronellol, Eugenol, Geraniol, Linalool, Phenylethylalkohol und Terpineol, zu den Kohlenwasserstoffen gehören hauptsächlich die Terpene wie Limonen und Pinen. Bevorzugt werden jedoch Mischungen verschiedener Riechstoffe verwendet, die gemeinsam eine ansprechende Duftnote des gebildeten

Parfümöl erzeugen.

Die Parfümöle können aber auch natürliche Riechstoffgemische enthalten, wie sie aus pflanzlichen Quellen zugänglich sind, z.B. Pine-, Citrus-, Jasmin-, Patchouly-, Rosen- oder Ylang-Ylang-Öl. Ebenfalls geeignet sind Muskateller-Salbeiöl, Kamillenöl, Nelkenöl, Melissenöl, Minzöl, Zimtblätteröl, Lindenblütenöl, Wacholderbeeröl, Vetiveröl, Olibanumöl, Galbanumöl und Labdanumöl sowie Orangenblütenöl, Neroliol, Orangenschalenöl und Sandelholzöl.
Um wahrnehmbar zu sein, muß ein Riechstoff flüchtig sein, wobei neben der Natur der funktionellen Gruppen und der Struktur der chemischen Verbindung auch die Molmasse eine wichtige Rolle spielt. So besitzen die meisten Riechstoffe Molmassen bis etwa 200 Dalton, während Molmassen von 300 Dalton und darüber eher eine Ausnahme darstellen. Aufgrund der unterschiedlichen Flüchtigkeit von Riechstoffen verändert sich der Geruch eines aus mehreren Riechstoffen zusammengesetzten Parfüms während des Verdampfens, wobei man die Geruchseindrücke in "Kopfnote" (top note), "Herz- bzw. Mittelnote" (middle note bzw. body) sowie "Basisnote" (end note bzw. dry out) unterteilt.

Haftfeste Riechstoffe, die im Rahmen der vorliegenden Erfindung vorteilhafterweise einsetzbar sind, sind beispielsweise die ätherischen Öle wie Angelikawurzelöl, Anisöl, Arnikablütenöl, Basilikumöl, Bayöl, Champacablütenöl, Edeltannenöl, Edeltannenzapfenöl, Elemiöl, Eukalyptusöl, Fenchelöl, Fichtennandelöl, Galbanumöl, Geraniumöl, Gingergrasöl, Guajakholzöl, Gurjunbalsamöl, Helichrysumöl, Ho-Öl, Ingweröl, Irisöl, Kajeputöl, Kalmusöl, Kamillenöl, Kampferöl, Kanagaöl, Kardamomenöl, Kassiaöl, Kiefernnadelöl, Kopaïvabalsamöl, Korianderöl, Krauseminzeöl, Kümmelöl, Kuminöl, Lemongrasöl, Moschuskörneröl, Myrrhenöl, Nelkenöl, Neroliöl, Niaouliöl, Olibanumöl, Origanumöl, Palmarosaöl, Patschuliöl, Perubalsamöl, Petitgrainöl, Pfefferöl, Pfefferminzöl, Pimentöl, Pine-Öl, Rosenöl, Rosmarinöl, Sandelholzöl, Sellerieöl, Sternanisöl, Thujaöl, Thymianöl, Verbenaöl, Vetiveröl, Wacholderbeeröl, Wermutöl, Wintergrünöl, Ylang-Ylang-Öl, Ysop-Öl, Zimtöl, Zimtblätteröl sowie Zypressenöl.
Aber auch die höhersiedenden bzw. festen Riechstoffe natürlichen oder synthetischen Ursprungs können im Rahmen der vorliegenden Erfindung vorteilhafterweise als haftfeste Riechstoffe bzw. Riechstoffgemische eingesetzt werden. Zu diesen Verbindungen zählen die nachfolgend genannten Verbindungen sowie Mischungen aus diesen: Ambrettolid, $\alpha$-Amylzimtaldehyd, Anethol, Anisaldehyd, Anisalkohol, Anisol, Anthranilsäuremethylester, Acetophenon, Benzylaceton, Benzaldehyd, Benzoesäureethylester, Benzophenon, Benzylalkohol, Borneol, Bornylacetat, $\alpha$-Bromstyrol, n-Decylaldehyd, n-Dodecylaldehyd, Eugenol, Eugenolmethylether, Eukalyptol, Farnesol, Fenchon, Fenchylacetat, Geranylacetat, Geranylformiat, Heliotropin, Heptincarbonsäuremethylester, Heptaldehyd, Hydrochinon-Di-methylether, Hydroxyzimtaldehyd, Hydroxyzimtalkohol, Indol, Iron, Isoeugenol, Isoeugenolmethylether, Isosafrol, Jasmon, Kampfer, Karvakrol, Karvon, p-Kresolmethylether, Cumarin, p-Methoxyacetophenon, Methyl-n-amylketon, Methylanthranilsäuremethylester, p-Methylacetophenon, Methylchavikol, p-Methylchinolin, Methyl-$\beta$-naphthylketon, Methyl-n-nonylacetaldehyd, Methyl-n-nonylketon, Muskon, $\beta$-Naphtholethylether, $\beta$-Naphtholmethylether, Nerol, Nitrobenzol, n-Nonylaldehyd, Nonylakohol, n-Octylaldehyd, p-Oxy-Acetophenon, Pentadekanolid, $\beta$-Phenylethylakohol, Phenylacetaldehyd-Dimethylacetal, Phenylessigsäure, Pulegon, Safrol, Salicylsäureisoamylester, Salicylsäuremethylester, Salicylsäurehexylester, Salicylsäurecyclohexylester, Santalol, Skatol, Terpineol, Thymen, Thymol, $\gamma$-Undelacton, Vanillin, Veratrumaldehyd, Zimtaldehyd, Zimtalkohol, Zimtsäure, Zimtsäureethylester, Zimtsäurebenzylester.
Zu den leichter flüchtigen Riechstoffen, die im Rahmen der vorliegenden Erfindung vorteilhaft einsetzbar sind, zählen insbesondere die niedriger siedenden Riechstoffe natürlichen oder synthetischen Ursprung, die allein oder in Mischungen eingesetzt werden können. Beispiele für leichter flüchtige Riechstoffe sind Alkyisothiocyanate (Alkylsenföle), Butandion, Limonen, Linalool, Linaylacetat und -propionat, Menthol, Menthon, Methyl-n-heptenon, Phellandren, Phenylacetaldehyd, Terpinylacetat, Zitral, Zitronellal.

Da das erfindungsgemäße Mittel eine ganz gezielte Parfümierung der Wäsche über den maschinellen Textiltrocknungsvorgang erlaubt, können dem Verbraucher auch ganz gezielt besondere Dufterlebnisse angeboten werden, z.B. Wäsche mit einem aprikosenartigem Geruch oder Wäsche mit einem Rose-artigem Geruch.

Entsprechend kann die erfindungsgemäße PIT-Emulsion nach einer bevorzugten Ausführungsform insbesondere Riechstoffe mit

(a) mandelartigem Geruch, wie vorzugsweise Benzaldehyd, Pentanal, Heptenal, 5-Methylfurfural, Methylbutanal, Furfural und/oder Acetophenon oder

(b) apfelartigem Geruch, wie vorzugsweise (S)-(+)-Ethyl-2-methylbutanoat, Diethylmalonat, Ethylbutyrat, Geranylbutyrat, Geranylisopentanoat, Isobutylacetat, Linalylisopentanoat, (E)-$\beta$-Damascone, Heptyl-2-methylbutyrat, Methyl-3-methylbutanoat, 2-Hexenal-pentylmethylbutyrat, Ethylmethylbutyrate und/oder Methyl-2-Methylbutanoat oder

(c) apfelschalenartigem Geruch, wie vorzugsweise Ethylhexanoat, Hexylbutanoat und/oder Hexylhexanoat oder

(d) aprikosenartigem Geruch wie vorzugsweise $\gamma$-Undecalacton oder

(e) bananenartigem Geruch, wie vorzugsweise Isobutylacetat, Isoamylacetat, Hexenylacetat und/oder Pentylbutanoat oder

(f) bittermandelartigem Geruch wie vorzugsweise 4-Acetyltoluol oder

(g) schwarze Johannisbeere-artigem Geruch wie vorzugsweise Mercaptomethylpentanon und/oder Methoxymethylbutanethiol oder

(h) zitrusartigem Geruch wie vorzugsweise Linalylpentanoat, Heptanal, Linalylisopentanoat dodecanal, Linalylformiat, α-p-Dimethylstyrol, p-Cymenol, Nonanal, β-Cubebene, (Z)-Limonenoxid, cis-6-Ethenyltetrahydro-2,2,6-trimethylpyran-3-ol, cis-pyranoidlinalooloxid, Dihydrolinalool, 6(10)-Dihydromyrcenol, Dihydromyrcenol, β-Farnesen, (Z)-β-Farnesen, (Z)-Ocimen, (E)-Limonenoxid, Dihydroterpinylacetat, (+)-Limonen, (Epoxymethylbutyl)-methylfuran und/oder p-Cymen oder

(i) kakaoartigem Geruch wie vorzugsweise Dimethylpyrazin, Butylmethylbutyrat und/oder Methylbutanal oder

(j) kokusnußartigem Geruch, wie vorzugsweise γ-Octalacton, γ-Nonalacton, Methyllaurat, Tetradecanol, Methylnonanoat, (3S,3aS,7aR)-3a,4,5,7a-tetrahydro-3,6-dimethylbenzofuran-2(3H)-on, 5-Butyldihydro-4-methyl-2(3H)-Furanon, Ethylundecanoat und/oder δ-Decalacton oder

(k) sahneartigem Geruch wie vorzugsweise Diethylacetal, 3-Hydroxy-2-butanon, 2,3-Pentadion und/oder 4-Heptenal oder

(l) blumenartigem Geruch wie vorzugsweise Benzylalcohol, Phenylessigsäure, Tridecanal, p-Anisylalcohol, Hexanol, (E,E)-Farnesylaceton, Methylgeranat, trans-Crotonaldehyd, Tetradecylaldehyd, Methylanthranilat, Linalooloxid, Epoxylinalool, Phytol, 10-epi-γ-Eudesmol, Neroloxid, Ethyldihydrocinnamat, γ-Dodecalacton, Hexadecanol, 4-Mercapto-4-methyl-2-pentanol, (Z)-Ocimene, Cetylalcohol, Nerolidol, Ethyl-(E)-cinnamat, Elemicin, Pinocarveol, α-Bisabolol, (2R,4R)-Tetrahydro-4-methyl-2-(2-methyl-1-propenyl)-2H-pyran, (E)-Isoelemicin, Methyl-2-methylpropanoat, Trimethylphenylbutenon, 2-Methylanisol, β-Farnesol, (E)-Isoeugenol, Nitro-phenylethan, Ethylvanillat, 6-Methoxyeugenol, Linalool, β-Ionon, Trimethylphenylbutenon, Ethylbenzoat, Phenylethylbenzoat, Isoeugenol und/oder Acetophenone oder

(m) Frische-Geruch wie vorzugsweise Methylhexanoat, Undecanon, (Z)-limonenoxid, Benzylacetat, Ethylhydroxyhexanoat, Isopropylhexanoat, Pentadecanal, β-Elemene, α-Zingiberene, (E)-Limonenoxid, (E)-p-Mentha-2,8-dien-1-ol, Menthon, Piperiton, (E)-3-Hexenol und/oder Carveol oder

(n) Frucht-Geruch wie verzugsweise Ethylphenylacetat, Geranylvalerat, γ-Heptalacton, Ethylpropionat, Diethylacetal, Geranylbutyrat, Ethylheptylat, Ethyloctanoat, Methylhexanoat, Dimethylheptenal, Pentanon, Ethyl-3-methylbutanoat, Geranylisovalerat, Iobutylacetat, Ehoxypropanol, Mthyl-2-butenal, Methylnonanedion, Linalylacetat, Mthylgeranat, Lmonenoxid, Hdrocinnamicalcohol, Dethylsuccinat, Ehylhexanoat, Ehylmethylpyrazin, Nryletat, Ctronellylbutyrat, Heylacetat, Nonylacetat, Butylmethylbutyrat, Pentenal, Isopentyldimethylpyrazin, p-menth-1-en-9-ol, Hexadecanon, Octylacetat, γ-Dodecalacton, Epoxy-β-ionon, Ethyloctenoat, Ethylisohexanoat, Isobornylpropionat, Cedrenol, p-menth-1-en-9-yl acetat, Cadinadien, (Z)-3-Hexenylhexanoat, Ethylcyclohexanoat, 4-Methylthio-2-butanon, 3,5-Octadienon, Methylcyclohexancarboxylat, 2-pentylthiophen, α-Ocimene, Butandiol, Ethylvalerat, Pentanol, Isopiperiton, Butyloctanoat, Ethylvanillat, Methylbutanoat, 2-Mmethylbutylacetat, Propylhexanoat, Butylhexanoat, Isopropylbutanoat, Spathulenol, Butanol, δ-Dodecalacton, Methylquinoxalin, Sesquiphellandren, 2-Hexenol, Ethylbenzoate,Isopropylbenzoat, Ethyllactat und/oder Citronellylisobutyrat oder

(o) Geranium-artigen Geruch, wie vorzugsweise Geraniol, (E,Z)-2,4-Nonadienal, Octadienon und/oder o-Xylen oder

(p) weintraubenartigem Geruch wie vorzugsweise Ethyldecanoat und/oder Hexanon oder

(q) grapefruitartigem Geruch wie vorzugsweise (+)-5,6-Dimethyl-8-isopropenylbicyclo[4.4.0]dec-1-en-3-on und/oder p-Menthenethiol oder

(r) grasartigem Geruch wie vorzugsweise 2-Ethylpyridin, 2,6-Dimethylnaphthalen, Hexanal und/oder (Z)-3-Hexenol oder

(s) grüner Note, vorzugsweise 2-Ethylhexanol, 6-Decenal, Dimethylheptenal, Hexanol, Heptanol, Methyl-2-butenal, Hexyloctanoate, Nonansäure, Undecanon, Methylgeranat, Isobornylformiate, Butanal, Octanal, Nonanal, Epoxy-2-decenal, cis-Linalool, Pyranoxid, Nonanol, alpha,γ-dimethylallylalcohol, (Z)-2-penten-1-ol, (Z)-3-hexenylbutanoat, Isobutylthiazol, (E)-2-nonenal, 2-dodecenal, (Z)-4-decenal, 2-octenal, 2-hepten-1-al, Bicyclogermacrene, 2-Octenal, α-Thujene, (Z)-β-Farnesene, (-)-γ-Elemene, 2,4-Octadienal, Fucoserraten, Hexenylacetat, Geranylaceton, Valencene, β-Eudesmol, 1-Hexenol, (E)-2-Undecenal, Artemisia keton, Viridiflorol, 2,6-Nonadienal, Trimethylphenylbutenon, 2,4-Nonadienal, Butylisothiocyanat, 2-Pentanol, Elemol, 2-Hexenal, 3-Hexenal, (+)-(E)-Limonenoxid, cis-Isocitral, Dimethyloctadienal, Bornylformiat, Bornylisovalerat, Isobutyraldehyd, 2,4-Hexadienal, Trimethylphenylbutenon, Nonanon, (E)-2-Hexenal, (+)-cis-Rosenoxide, Menthone, Coumarin, (Epoxymethylbutyl)-methylfuran, 2-Hexenol, (E)-2-hexenol und/oder Carvylacetat oder

(t) Grüner Tee-artigem Geruch, vorzugsweise (-)-Cubenol oder

(u) kräuterartigem Geruch, vorzugsweise Octanon, Hexyloctanoat, Caryophyllenoxide,. Methylbutenol, Safranal, Benzylbenzoat, Bornylbutyrat, Hexylacetat, β-Bisabolol, Piperitol, β-Selinene, α-Cubebene, p-Menth-1-en-9-ol, 1,5,9,9-Tetramethyl-12-oxabicyclododeca-4,7-dien, T-muurolol, (-)-Cubenol, Levomenol, Ocimene, α-Thujene, p-Menth-1-en-9-yl acetat, Dehydrocarveol, Artemisia alcohol, γ-Muurolene, Hydroxypentanon, (Z)-Ocimene, β-Elemene, δ-Cadinol, (E)-β-Ocimene, (Z)-Dihydrocarvone, α-Cadinol, Calamenen, (Z)-Piperitol. Lavandulol, β-Bourbonene, (Z)-3-Hexenyl-2-methylbutanoat, 4-(1-Methylethyl)-benzenemethanol, Artemisia keton, Methyl-2-butenol, Heptanol, (E)-Dihydrocarvon, p-2-Menthen-1-ol, α-Curcumene, Spathulenol, Sesquiphellandren, Citronellylvalerat,

Bornylisovalerat, 1,5-Octadien-3-ol, Methylbenzoat, 2,3,4,5-Tetrahydroanisol und/oder Hydroxycalamenen oder

(v) honigartigem Geruch, vorzugsweise Ethylcinnamate, β-Phenethylacetat, Phenylessigsäure, Phenylethanal, Methylanthranilat, Zimtsäure, β-Damascenone, Ethyl-(E)-cinnamat, 2-Phenylethylalcohol, Citronellylvalerate, Phenylethylbenzoate und/oder Eugenol oder

(w) Hyazinthen-artigem Geruch, vorzugsweise Hotrienol oder

(x) jasminartigem Geruch, vorzugsweise Methyljasmonate, Methyldihydroepijasmonat und/oder Methylepijasmonat oder

(y) lavendelartigem Geruch, vorzugsweise Linalylvalerate und/oder Linalool oder

(z) zitronenartigem Geruch, vorzugsweise Neral, Octanal, δ-3-Carene, Limonen, Geranial, 4-mercapto-4-methyl-2-pentanol, Citral, 2,3-Dehydro-1,8-cineol und/oder α-Terpinen oder

(aa) lilienartigem Geruch, vorzugsweise Dodecanal oder

(bb) magnolienartigem Geruch, vorzugsweise Geranylaceton oder

(cc) mandarinenartigem Geruch, vorzugsweise Undecanol oder

(dd) melonenartigem Geruch, vorzugsweise Dimethylheptenal oder

(ee) Minze-artigem Geruch, vorzugsweise Menthone, Ethylsalicylat, p-Anisaldehyd, 2,4,5,7a-tetrahydro-3,6-dimethyl-benzofuran, Epoxy-p-menthene, Geranial, (Methylbutenyl)-methylfuran, Dihydrocarvylacetat, β-Cyclocitral, 1,8-Cineol, β-Phellandrene, Methylpentanon, (+)-Limonen, Dihydrocarveol (-)-Carvon, (E)-p-Mentha-2,8-dien-1-ol, Isopulegylacetat, Piperiton, 2,3-Dehydro-1,8-cineol, α-Terpineol, DL-carvon und/oder α-Phellandrene oder

(ff) nußartigem Geruch, vorzugsweise 5-methyl-(E)-2-hepten-4-on, γ-Heptalacton, 2-Acetylpyrrol, 3-Octen-2-on, Dihydromethylcyclopentapyrazin, Acetylthiazol, 2-Octenal, 2,4-Heptadienal, 3-Octenon, Hydroxypentanon, Octanol, Dimethylpyrazin, Methylquinoxalin und/oder Acetylpyrrolin oder

(gg) orangenartigem Geruch, vorzugsweise Methyloctanoat, Undecanon, Decylalcohol, Limonen und/oder 2-Decenal oder

(hh) Orangenschalen-artigem Geruch, vorzugsweise Decanal und/oder β-Carene oder

(ii) pfirsichartigem Geruch, vorzugsweise γ-Nonalacton, (Z)-6-Dodecene-γ-lacton, δ-Decalacton, R-δ-Decenolacton, Hexylhexanoat, 5-Octanolid, γ-Decalacton und/oder δ-Undecalacton oder

(jj) Pfefferminze-artigem Geruch, vorzugsweise Methylsalicylat und/oder I-Menthol oder

(kk) Kiefer-artigem Geruch, vorzugsweise α-p-Dimethylstyrol, β-Pinene, Bornylbenzoat, δ-Terpinen, Dihydroterpinylacetat und/oder α-Pinen oder

(ll) ananasartigem Geruch, vorzugsweise Propylbutyrat, Propylpropanoat und/oder Ethylacetat oder

(mm)pflaumenartigem Geruch, vorzugsweise Benzylbutanoat, oder

(nn) himbeerartigem Geruch, vorzugsweise β-Ionone oder

(oo) Rose-artigem Geruch, vorzugsweise β-Phenethylacetat, 2-Ethylhexanol, Geranylvalerat, Geranylacetat, Citronellol, Geraniol, Geranylbutyrat, Geranylisovalerat, Citronellylbutyrat, Citronellylacetat, Isogeraniol, Tetrahydro-4-methyl-2-(2-methyl-1-propenyl)-2,5-cis-2H-pyran, Isogeraniol, 2-Phenylethylalcohol, Citronellylvalerat und/oder Citronellylisobutyrat, oder

(pp) Grüne Minze-artigem Geruch, vorzugsweise Carvylacetate und/oder Carveol, oder

(qq) erdbeerenartigem Geruch, vorzugsweise Hexylmethylbutyrat, Methylcinnamat, Pentenal, Methylcinnamate oder

(rr) süßlichem Geruch, vorzugsweise Benzylalcohol, Ethylphenylacetat, Tridecanal, Nerol, Methylhexanoat, Linalylisovalerat, Undecanaldehyd, Caryophyllenoxid, Linalylacetat, Safranal, Uncineol, Phenylethanal, p-Anisaldehyd, Eudesmol, Ethylmethylpyrazin, Citronellylbutyrat, 4-Methyl-3-penten-2-on, Nonylacetat, 10-Epi-γ-eudesmol, β-Bisabolol, (Z)-6-Dodecen-γ-lacton, β-Farnesene, 2-Dodecenal, γ-Dodecalacton, Epoxy-β-ionon, 2-Undecenal, Styrenglycol, Methylfuraneol, (-)-cis-Rosenoxid, (E)-β-Ocimene, Dimethylmethoxyfuranon, 1,8-Cineole, Ethylbenzaldehyd, 2-Pentylthiophen, α-Farnesene, Methionol, 7-Methoxycoumarin, (Z)-3-Hexenyl-2-methylbutanoat, o-Aminoacetophenon, Viridiflorol, Isopiperitone, β-Sinensal, Ethylvanillat, Methylbutanoat, p-Methoxystyrol, 6-Methoxyeugenol, 4-Hexanolid, δ-Dodecalacton, Sesquiphellandren, Diethylmalat, Linalylbutyrat, Guaiacol, Coumarin, Methylbenzoat, Isopropylbenzoat, Safrole, Durene, γ-Butyrolacton, Ethylisobutyrat und/oder Furfural oder

(ss) Vanille-artigem Geruch, vorzugsweise Vanillin, Methylvanillat, Acetovanillon und/oder Ethylvanillat oder

(tt) wassermelonenartigem Geruch, vorzugsweise 2,4-Nonadienal oder

(uu) holzartigem Geruch, vorzugsweise α-Muurolene, Cadina-1,4-dien-3-ol, Isocaryophyllene, Eudesmol, α-Ionon, Bornylbutyrat, (E)-α-Bergamoten, Linalooloxid, Ethylpyrazin, 10-epi-γ-Eudesmol, Germacrene B, trans-Sabinenhydrat, Dihydrolinalool, Isodihydrocarveol, β-Farnesene, β-Sesquiphellandren, δ-Elemene, α-Calacorene, Epoxy-β-ionon, Germacrene D, Bicyclogermacrene, Alloaromadendrene, α-Thujene, oxo-β-Ionon, (-)-γ-Elemene. γ-Muurolene, Sabinene, α-Guaiene, α-Copaene, γ-Cadinene, Nerolidol, β-Eudesmol, α-Cadinol, δ-Cadinene, 4,5-Dimethoxy-6-(2-propenyl)-1,3-benzodioxol, [1ar-(1aalpha,4aalpha,7alpha,7abeta,7balpha)]-decahydro-1,1,7-trimethyl-4-methylene-1H-cycloprop[e]azulen, α-Gurjunen, Guaiol, α-Farnesene, γ-Selinene, 4-(1-Methylethyl)-benzenemethanol, Perillen, Elemol, α-Humulene, β-Caryophyllene und/oder β-Guaiene oder (vv) Mischungen aus vorgenannten.

enthalten.

Besonders vorteilhaft ist es, Parfümöle zu verwenden, welche im allgemeinen mit bestimmten Eindrücken assoziiert werden. Ein Parfümöl kann vorteilhafterweise Assoziationen zu Eindrücken wie "Sauberkeit" und "Frische" wecken, welche im allgemeinen mit der Verwendung von Waschmitteln in Verbindung gebracht werden. Ein anderes Parfümöl kann vorteilhafterweise den Eindruck von "Pflege" unterstützen.

Im Rahmen dieser Erfindung bevorzugte Riechstoffe, welche mit Vorteil eingesetzt werden können, um den Eindruck von "Sauberkeit" und "Frische" zu vermitteln bzw. zu begleiten, sind Bergamotteöl, Tangerineoel, Dimethylanthranilat, Aldehyd C 11 (en), Dihydromyrcenol, 4-tert-Butylcyclohexylacetat, Allylamylglycolat, Tetrahydrolinalool, 6-Methyl-gamm-ionon, Isobornylacetat, Cyclovertal, Ethyllinalool, Aldehyd C 12, Dynascone 10, Limonen, Orangenoel, Isobornylacetat, Eucalyptusoel (globulus), Calone, Cyclovertal, Ethyl-2-methylbutyrat, Tetrahydrolinalool, Aldehyd C 10, Styrolylacetat, Otbca, Waterfruit base, Citronitril, Undecavertol, Styrolylacetat, Tonalid und/oder Dihydromethyljasmonat, insbesondere aber Dihydromyrcenol und/oder 4-tert-Butylcyclohexylacetat. Bevorzugte Parfümöle können folglich zumindest einen der zuvor genannten Riechstoffe umfassen.

Im Rahmen dieser Erfindung bevorzugte Riechstoffe, welche eingesetzt werden können, um den Eindruck einer "pflegenden Wirkung" zu verstärken bzw. zu begleiten, sind Aldehyd C 14, Decalacton gamma, Cyclamenaldehyd, Lilial, Troenan, Canthoxal, Citronellol, Geraniol, Moschus, Phenylethylalkohol, Dihydrofloriffone, Dmbca, Phenirat, Phenylethylisobutyrat, Rosenoxid, Jasmelia, Hexylzimtaldehyd (alpha), Jonon beta, Ylang, Cyclohexylsalicylat, Hexenylsalicylat (cis-3), Sandelice, Santobar, Bacdanol, Guajakholzoel, Iso E Super, Timberol (forte), Norlimbanol, Ambroxan, Zimtalkohol, Cyclopentadecanolide, Nirvanol, Javanol, Aldehyd C 11, Habanolide, Maltol, Benzylaceton, Cumarin, Benzylsalicylat, Melonal, Galbanum(öl), Ethylvanillin, Koavone, Ptbca 25 cis, Hedione, Lilial, Dihydrofloriffone, Isoraldein, Methylpalmitat, Methyloleat und/oder Methylmyristat. Bevorzugte Parfümöle können folglich zumindest einen der zuvor genannten Riechstoffe umfassen.

Nach einer weiteren bevorzugten Ausführungsform enthält das erfindungsgemäße Produkt zumindest einen Riechstoff, vorzugsweise 2, 3 oder mehr Riechstoffe, aus der Liste Galaxolid, Dihydromyrcenol, 4-tert-Butylcyclohexylacetat, gamma-iso-Methylionon, Tetrahydrolinalool, Hexylcinnamaldehyd, Lilial, Linalool, Amylcinnamaldehyd, 6-Methyl-gamma-ionon, Methyloleat, Nerylacetat, 15-Pentadecalacton, Phenoxyethylisobutyrat, Phenylethylmethanoat, $\alpha$-Pinene, b-Pinene, Rose Oxide, Sabinene, Anethol, Benzoesäure-2-hydroxy-pentylester, Diphenylether, Benzophenon, Cyclamenaldehyd, $\alpha$-Damascon, Decanal, Dicyclopentadien Alkohol, Allylcyclohexylpropionat, Isobornylacetat, Bornylacetet, Dihydromethyljasmonat, Eucalyptol, n-Dodecanol, Ethylpalmitat, Geraniolacetat, Hexylacetat, n-Hexylsalicylat, $\alpha$-Ionon, Methylpalmitat, 2-Naphthylmethylketon, iso-Propylmyristat, Rosephenon, Widdrene, Styrallylacetat, Thujopsen, Dimethylbenzylcarbinylbutyrat, Limonen, Dimethylbenzylcarbinylacetat, Citronellol, 2-tert-Butylcyclohexanol, Caryophyllene, Ethylstearat, Tonalid, 2,4-Hexadienal, Methanoazulen, Methyllaurat, Methylmyristat, 2-Methylundecanal, Myrcene, Nonanal, Nopylacetat, 15-Pentadecalacton, beta-Phellandrene, 3-Phenyl-2-methyl-propen, Rosacetat, Traseolide und/oder $\alpha$-Terpineol.

Im Rahmen der vorliegenden Erfindung entspricht es ebenfalls einer bevorzugten Ausführungsform, wenn das enthaltene Parfümöle zumindest einen, vorzugsweise zumindest zwei, vorteilhafterweise zumindest drei, in weiter vorteilhafterweise zumindest vier, in noch vorteilhafterer Weise zumindest fünf, insbesondere zumindest sechs Duftstoffalkohole enthält, welche vorzugsweise gewählt sind aus Acetovanillon, Allylamylglycolat, Allylisoamylglycolat, $\alpha$-Amylcinammylalkohol, Anisylalkohol, Benzoin, Benzylalkohol, Benzylsalicylat, 1-Butanol, Butyllactat, 2-t-Butyl-5-methylphenol, 2-t-Butyl-6-methylphenol, Carvacrol, Carveol, 4-Carvomenthenol, Cedrol, Cetylalkohol, Cinnamicalkohol, Citronellol, o-Cresol, m-Cresol, p-Cresol, Crotylalkohol, Decahydro-2-naphthol, 1-Decanol, 1-Decen-3-ol, 9-Decen-1-ol, Diethylmalat, Diethyltartrat, Dihydrocarveol, Dihydromyrcenol, 2,6-Diisopropylphenol, Dimethiconecopolyol, 2,6-Dimethoxyphenol, 1,1-Dimethoxy-3,7-dimethyloctan-7-ol, 2,6-Dimethyl-4-heptanol, 2,6-Dimethylheptan-2-ol, 6,8-Dimethyl-2-nonanol, 3,7-Dimethyl-2,6-octadien-1-ol, 3,7-Dimethyl-1,6-octadien-3-ol, 3,7-Dimethyl-1-octanol, 3,7-Dimethyl-3-octanol, 3,7-Dimethyl-6-octen-1-ol, 3,7-Dimethyl-7-octen-1-ol, Dimetol, 2-Ethylfenchol, 4-Ethylguaiacol, 2-Ethyl-1-hexanol, Ethyl 2-hydroxybenzoat, Ethyl 3-hydroxybutyrat, 3-Ethyl-2-hydroxy-2-cyclopenten-1-on, Ethyl-2-hydroxycaproat, Ethyl 3-hydroxyhexanoat, Ethyllactat, Ethylmaltol, p-Ethylphenol, Ethylsalicylat, Eugenol, Farnesol, Fenchylalkohol, Geraniol, Glucosepentaacetat, Glycerol, Glycerylmonostearat, Guaiacol, 1-Heptanol, 2-Heptanol, 3-Heptanol, cis-4-Heptenol, cis-3-Heptenol, n-Hexanol, 2-Hexanol, 3-Hexanol, cis-2-Hexenol, cis-3-Hexenol, trans-3-Hexenol, 4-Hexenol, cis-3-Hexenylhydrocinnamylalkohol, 2-Hydroxybenzoat, 2-Hydroxyacetophenon, 4-Hydroxybenzylalkohol, 3-Hydroxy-2-butanon, Hydroxycitronellal, 4-(4-Hydroxy-3-methoxyphenyl)-2-butanon, 2-Hydroxy-3-methyl-2-cyclopenten-1-on, 4-(p-Hydroxyphenyl)-2-butanon, 2-Hydroxy-3,5,5-trimethyl-2-cyclohexenon, Delta-Isoascorbic acid, Isoborneol, Isoeugenol, Isophytol, Isopropylalkohol, p-Isopropylbenzylalkohol, 4-Isopropylcylcohexanol, 3-Isopropylphenol, 4-Isopropylphenol, 2-Isopropylphenol, Isopulegol, Laurylalkohol, Linalool, Maltol, Menthol, 4-Methoxybenzylalkohol, 2-Methoxy-4-methylphenol, 2-Methoxy-4-propylphenol, 2-Methoxy-4-vinylphenol, $\alpha$-Methylbenzylalkohol, 2-Methylbutanol, 3-Methyl-2-butanol, 3-Methyl-2-buten-1-ol, 2-Methyl-3-buten-2-ol, Methyl 2,4-dihydroxy-3,6-dimethylbenzoat, 4-Methyl-2,6-dimethoxyphenol, Methyl N-3,7-dimethyl-7-hydroxyoctylideneanthranilat, Methyl-3-hydroxyhexanoat, 6-Methyl-5-hepten-2-ol, 2-Methylpentanol, 3-Methyl-3-pentanol, 2-Methyl-4-phenylbutan-2-ol, 2-Methyl-3-phenylpropan-2-ol, Methylsalicylat, 3-Methyl-5-(2,2,3,-trimethyl-3-cyclopenten-1-yl)-4-penten-2-ol, 2-Methyl-2-vinyl-5-(1-hydroxy-1-methyl ethyl)-3,4-dihydrofuran, Myrtenol, Neohesperidin dihydrochalcon, Neomenthol, Nerol, Nerolidol, trans-2-cis-6-Nonadienol, 1,3-Nonanediol acetat, Nonadyl, 2-Nonanol, cis-6-Nonen-1-ol, trans-2-Nonen-1-ol, Nonylalkohol, 1-Octanol, 2-Octanol, 3-Octanol, cis-3-Octen-1-ol, cis-2-Octen-1-ol, trans-2-Octen-1-ol, cis-6-Octen-1-ol, cis-Octen-1-ol, 1-Octen-3-ol, Oleylalkohol, Patchoulialkohol, 3-Pentanol, n-Pentanol, 2-Pentanol, 1-Penten-1-ol, cis-2-Penten-1-ol, Perillylalkohol, 2-Phenoxyethanol-arabinogalactan, Beta-Phenethylalkohol, Phenethyl salicylat, Phenol, Phenylacetaldehydglycerylacetal, 3-Phenyl-1-pentanol, 5-Phenyl-1-pentanol, 1-Phenyl-1-pentanol, 1-Phenyl-2-pentanol, 1-Phenyl-3-methyl-1-pentanol, Phytol, Pinacol, Polyalkylenglycol, Polysorbat 20, Polysorbat 60, Polysorbat 80, Prenol, n-Propanol, Propenylguaethol, Propyleneglycol, 2-Propylphenol, 4-Propylphenol, Resorcinol, Retinol, Salicylaldehyd, Sorbitan monostearat, Sorbitol, Stearyl alkohol, Syringealdehyd, $\alpha$-Terpineol, Tetrahydrogeraniol, Tetrahydrolinalool, Tetrahydromyrcenol, Thymol, Triethylcitrat, 1,2,6-Trihydroxyhexan, p-$\alpha$,$\alpha$-Trimethylbenzylalkohol, 2-(5,5,6-Trimethylbicyclo[2.2.1]hept-2-ylcyclohexanol, 5-(2,2,3-Trimethyl-3-cyclopentenyl)-3-methylpentan-2-ol, 3,7,-11-Trimethyl-2,6,10-dodecatrien-1-ol, 3,7,11-Trimethyl-1,6,10-dodecatrien-3-ol, 3,5,5-Trimethyl-1-hexanol, 10-Undecen-1-ol, Undecylalkohol, Vanillin, o-Vanillin, Vanillylbutylether, 4-Vinylphenol, 2,5-Xylenol, 2,6-Xylenol, 3,5-Xylenol, 2,4-Xylenol und/oder Xylose.

Im Rahmen der vorliegenden Erfindung entspricht es ebenfalls einer bevorzugten Ausführungsform, wenn das enthaltene Parfümöle zumindest einen, vorzugsweise zumindest zwei, vorteilhafterweise zumindest drei, in weiter vorteilhafterweise zumindest vier, in noch vorteilhafterer Weise zumindest fünf, insbesondere zumindest sechs Duftstoffe mit Carbonylfunktion enthält, welche vorzugsweise gewählt sind aus 4-Acetoxy-3-pentyl-tetrahydropyran, Allylcinnamat, Allyl 2-ethylbutyrat, Allylcyclohexanepropionat, Allylheptanoat, Allylhexanoat, Allylisovalerat, Allylnonanoat, Allyloctanoat, Allylphenoxyacetat, Allylphenylacetat, Allylpropionat, $\alpha$-Amylcinnamylacetat, Amyloctanoat, Anisylacetat, Anisylphenylacetat, Benzylacetat, Benzylacetoacetat, Benzylbutyrat, Benzylcinnamat, Benzylisobutyrat, Benzylisovalerat, Benzylphenylacetat, Benzylpropionat, Bornylacetat, Bornylisovalerat, Bornylvalerat, Butylacetat, Butylbutyrat, Butylbutyryllactat, 4-t-Butylcyclohexyl-acetat, Butylheptanoat, Butylhexanoat, Butylisobutyrat, Butylisovalerat, Butyllaurat, Butylpropionat, Butylstearat, 3-Butylidenephthalid, Butyl-2-methylbutyrat, Butyl-10-undeceneoat, Gamma-Butyrolacton, Carvylacetat, Carvylpropionat, Caryophyllenacetat, Cedrylacetat, trans-Cinnamylacetat, trans-Cinnamylbutyrat, Cinnamylcinnamat, Cinnamylisobutyrat, Citronellylacetat, Citronellylbutyrat, Citronellylisobutyrat, Citronellylpropionat, Citronellylvalerat, Cyclohexaneethylacetat, Cyclohexylacetat, Cyclohexylbutyrat, Cyclohexylisovalerat, Cyclohexylpropionat, Delta-Decalacton, Epsilon-Decalacton, Gamma-Decalacton, 4-Decanolid, Decylacetat, Decylbutyrat, Decylpropionat, Diethylmalonat, Diethylsebacat, Diethylsuccinat, Dihydrocarvylacetat, Dihydrocoumarin, Dihydromyrcenylacetat, Dihydro-nordicyclopentadienylacetat, Dihydroterpinylacetat, 3,7-Dimethyl-1,6-octadien-3-yl acetat, 3,7-Dimethyl-1,6-octadien-3-ylpropionat, 3,7-Dimethyloctan-3-yl-acetat, $\alpha$,$\alpha$-Dimethylphenethylacetat, $\alpha$,$\alpha$-Dimethylphenethylbutyrat, 6, 10-Dimethyl-5,9-undecadien-2-yl-acetat, Delta-Dodecalacton, epsilon-Dodecalacton, Gamma-Dodecalacton, Ethylacetat, Ethylacetoacetat, Ethyl-6-acetoxyhexanoat, Ethyl-2-acetyl-3-phenylpropionat, Ethylbenzoylacetat, 2-Ethylbutylacetat, Ethylbutyrat, Ethylcinnamat, Ethylcyclohexanpropionat, Ethyldecanoat, Ethylenbrassylat, Ethyl-2-ethyl-6,6-dimethyl-2-cyclohexenecarboxylat, Ethyl-2,3-epoxy-butyrat, Ethyl-2-methyl-4-penteneoat, Ethylheptanoat, Ethylhexanoat, Ethyl-trans-3-hexenoat, 2-Ethylhexylacetat, Ethylisobutyrat, Ethylisovalerat, Ethyllaurat, Ethyl 2-mercaptopropionat, Ethyl-3-mercaptopropionat, Ethyl-2-methylbutyrat, Ethyl-2-methylpentanoat, Ethyl-(methyl-thio)acetat, Methyl-(methylthio)acetat, Methyl-2-(methylthio) propionat, Ethylmyristat, Ethylnonanoat, Ethyloctanoat, Ethylpalmitat, Ethylphenylacetat, Ethyl-3-phenylpropionat, Ethyl-3-phenyl-2,3-epoxybutyrat, Ethyl-3-phenylpropionat, Ethylpropionat, Ethylstearat, Ethyl-2,3,6,6-tetramethyl-2-cyclohexencarboxylat, Ethyl-(p-tolyloxy)acetat, Ethylundecanoat, Ethylvalerat, Eugenylacetat, Fenchylacetat, Geranylacetat, Geranylbutyrat, Geranylphenylacetat, Geranylpropionat, Guaiacylphenylacetat, Guaicwoodacetat, Gamma-Heptalacton, Heptylacetat, Heptylbutyrat, Heptylisobutyrat, Omega-6-Hexadecenlacton, Delta-Hexylacton, Gamma-Hexylacton, 3-Hexenylacetat, cis-3-Hexenyl 2-Methylbutanoat, cis-3-Hexenyl-cis-3-Hexenoat, cis-3-Hexenylphenylacetat, trans-2-Hexenylacetat, Hexylacetat, Hexylbutyrat, Hexylhexanoat, Hexylisobutyrat, Hexylpropionat, Hexyl-2-methybutanoat, Hexyl-3-methylbutanoat, Hexylphenylacetat, Isoamylacetat, Isoamylacetoacetat, Isoamylbutyrat, Isoamylcinnamat, Isoamylhexanoat, Isoamylisobutyrat, Isoamylisovalerat, Isoamyllaurat, Isoamylnonanoat, Isoamyloctanoat, Isoamylphenylacetat, Isoamylpropionat, Isobornylacetat, Isobornylpropionat, Isobutylacetat, Isobutylbutyrat, Isobutylcinnamat, Isobutylhexanoat, Isobutylisobutyrat, Isobutyl-2-methylbutyrat, Isobutylpropionat, Isoeugenylacetat, Isopropylcinnamat, Isobutylphenylacetat, Isopropylacetat, Isopropylbutyrat, Isopropylisobutyrat, Isopropylmyristat, Isopropylpalmitat, Isopropylphenylacetat, Laurylacetat, Linalylacetat, Linalylbutyrat, Linalylisovalerat, Menthalacton, Menthylacetat, Menthylcyclohexancarboxylat, Menthylisovalerat, 4-Methoxybenzylacetat, 4-Methoxybenzylpropionat, 2-Methoxyphenylacetat, 2-Methoxy-4-(1-propenyl)phenylacetat, Methylacetat, $\alpha$-Methylbenzylacetat, $\alpha$-Methyl-benzylbutyrat, $\alpha$-Methylbenzylpropionat, 2-Methylbutylacetat, 2-Methylbutylbutyrat, 2-Methylbutylisovalerat, 3-Methylbutyl-2-Methylbutanoat, 2-Methylbutyl-2-methylbutanoat, Methyl-p-t-butylphenylacetat, Methylbutyrat, Methylcinnamat, Methyldecanoat, Methylheptanoat, Methylhexanoat, Methylisobutyrat, Methylisovalerat, Methyllaurat, Methyl-N-2-methyl-3-(4-t-butylphenylpropylidene)anthranilat, Methylmyristat, Methylnonanoat, Methyloctanoat, Methylpalmitat, 4-(4-Methyl-3-pentenyl)-3-cyclohexenylmethylacetat, Methyl-2-methylbutyrat, 2-Methyl-6-methylen-7-octen-2-yl-acetat, Methyl-4-methylvalerat, Methyl-2-methylpentanoat, Methylphenoxyacetat, 2-Methyl-3-phenylpropan-2-yl acetat, Methyl 3-phenylpropionat,

Methylpropionat, 2-Methylpropylphenylacetat, Methylphenylacetat, 2-Methyl-3-phenylpropan-2-yl acetat, Methylstearat, Methyl (p-tolyloxy)acetat, Methyl-9-undecenoat, Methylvalerat, Myrtenylacetat, Nerylacetat, Nerylbutyrat, Nerylisobutyrat, delta-Nonalacton, gamma-Nonalacton, 1,3-Nonanedioldiacetat, Nonylacetat, Octahydrocoumarin, gamma-Octalacton, 1-Octen-3-yl-acetat, 1-Octen-3-yl-butyrat, Octylacetat, Octylbutyrat, Octylisobutyrat, Octylisovalerat, Octyloctanoat, Octylpropionat, Oxacycloheptadec-10-en-2-on, omega-Pentadecalacton, Pentylacetat, Pentylbutyrat, Pentylhexanoat, Pentyloctanoat, Phenethylacetat, Phenethylbutyrat, Phenethylcinnamat, Phenethylhexanoat, Phenethylisobutyrat, Phenethylisovalerat, Phenethyl 2methylbutyrat, Phenethyl 2-methylbutyrat, Phenethyl 2-methylpropionat, Phenethyloctanoat, Phenethylphenylacetat, Phenethylpropionat, Phenoxyethylpropionat, 2-Phenoxyethyl 2-methylpropionat, 3-Phenyl-2-propenyl propionat, 3-Phenylpropylacetat, 2-Phenylpropylbutyrat, 2-Phenylpropylisobutyrat, 2-Phenylpropylisovalerat, Piperonylacetat, Piperonylisobutyrat, Prenylacetat, Propylacetat, Propylbutyrat, Propylheptanoat, Propylhexanoat, 3-Propylidenephthalid, Propyl isobutyrat, Propylpropionat, Propylphenylacetat, Sucrose octaacetat, Terpinylacetat, Terpinylbutyrat, Terpinylisobutyrat, Terpinylpropionat, Tetrahydrofurfurylacetat, Tetrahydrofurfurylbutyrat, Tetrahydrofurfurylpropionat, Tetrahydrolinalylacetat, 2,6,6,8-Tetramethyl-tricyclo[5.3.1.0(1.5)]udecan-8-yl-acetat, p-Tolylacetat, p-Tolylisobutyrat, p-Tolylphenylacetat, Triacetin, Tributylacetylcitrat, Tributyrin, Tripropionin, 3,5,5-Trimethylhexylacetat, 6-Undecalacton, gamma-Undecalacton, gamma-Valerolacton, Vanillinacetat, Vanillylisobutyrat, 1-Vinyl-2-(1-methylpropyl)cyclohexyl-acetat, Whiskeylacton, Butyraldehyd, Citronellal, Decanal, cis-4-Decenal, trans-4-Decenal, 2,4-Dimethyl-3-cyclohexen-1-carbaldehyd, 2,6-Dimethyl-5-heptenal, 3,7-Dimethyloctanal, 2-Ethylbutyraldehyd, Glutaricdialdehyd, Heptanal, cis-4-Heptenal, Hexanal, Hydrocinnamaldehyd, Isobutyraldehyd, 3-(p-Isopropylphenyl)-propionaldehyd, Isovaleraldehyd, Lauricaldehyd, 2-Methylbutyraldehyd, 2-Methyl-3-(p-isopropylphenyl) propionaldehyd, 2-Methylpentanal, 4-(4-Methyl-3-pentenyl)-3-cyclohexen-1-carbaldehyd, 4-Methylphenylacetaldehyd, 3-(Methylthio)butanal, 2-Methyl-4-(2,6,6-trimethyl-2-cyclohexen-1-yl)butanal, 2-Methyl-undecanal, Nonanal, cis-6-Nonenal, Octanal, Phenylacetaldehyd, 2-Phenylpropionaldehyd, 3-Phenylpropionaldehyd, Propionaldehyd, p-Tolylacetaldehyd, Tridecanal, 2,4,6-Trimethyl-3-cyclohexen-1-carbaldehyd, 2,6,10-Trimethyl-9-undecanal, 7-Undecenal, 8-Undecenal, 9-Undecenal, 10-Undecenal, Valeraldehyd, Acetanisol, 1'-Acetonaphthon, 2'-Acetonaphthon, Aceton, Acetophenon, 2-Acetoxy-2,5-dimethyl-3(2H) furanon, 2-Acetylcyclopentanon, 4-Acetyl-1,1-dimethyl-6-t-butylindan, 7-Acetyl-1,1,3,4,4,6-hexamethylindan, 2-Acetyl-2-thizolin, 6-Acetyl-1,1,2,4,4,7-hexamethyltetralin, Allyl-α-ionon, Benzylideneaceton, 2, 3-Butanedion, 2-sec-Butylcyclohexanon, 5-t-Butyl-3,5-dinitro-2,6-dimethylacetophenon, Butyrophenon, Camphor, 2-Decanon, 3-Decanon, 3-Decen-2-on, Dihydrocarvon, Dihydro-beta-ionon, Dihydrojasmon, 4,5-Dihydro-3(2H)-thiophenon, 2',4'-Dimethylacetophenon, 3,4-Dimethyl-1,2-cyclopentadion, 3,5-Dimethyl-1,2-cyclopentadion, 2,6-Dimethyl-4-heptanon, 1,3-Diphenyl-2-propanon, 4-(1-Ethoxyvinyl)-3,3,5,5-tetramethylcyclohexanon, p-Ethylacetophenon, Ethylvinylketon, Geranylaceton, 2,3-Heptanedion, 2-Heptanon, 3-Heptanon, 4-Heptanon, 3,4-Hexanedion, 3-Hexanon, 4-Hexen-3-on, 2-Hexylidene cyclopentanon, α-Ionon, beta-Ionon, 4-Isobutyl-2,6-dimethyl-3, 5-dinitroacetophenon, Isophoron, 6-Isopropyldecahydro-2-naphthon, cis-Jasmon, Livescon, 4-Methoxyacetophenon, 4-(p-Methoxyphenyl)-2-butanon, 4'-Methylacetophenon, 3-Methyl-1,2-cyclohexanedion, 3-Methyl-2-cyclohexen-1-on, 2-(2-(4-Methyl-3-cylcohexen-1-yl)propyl)-cyclopentanon, 3-Methyl-2-cyclopenten-1-on, Methyldihydrojasmonat, Methylethylketon, 2-Methyl-3-heptanon, 5-Methyl-2-hepten-4-on, 6-Methyl-5-hepten-2-on, 5-Methyl-α-ionon, 1-(2-Methyl-5-isopropyl-2-cyclohexenyl)-1-propanon, 4-Methyl-2-pentanon, 3-Methyl-2-(2-pentenyl)-2-cyclopenten-1-on, 4-Methyl-1-phenyl-2-pentanon, 2-Methyltetrahydrofuran-3-on, 2-Methyltetrahydrothiophen-3-on, 2-Nonanon, 3-Nonanon, 2-Octanon, 3-Octanon, 1-Octen-3-on, 3-Octen-2-on, 4-Oxoisophoron, 2-Pentadecanon, 2,3-Pentanedion, 2-Pentanon, 3-Pentanon, 3-Penten-2-on, 1-Phenyl-1, 2-Propandion, Propiophenon, Pulegon, 2-Tridecanon, 2,2,6-Trimethylcyclohexanon, 4-(2,6,6-Trimethyl-2-cylcohexen-1-yl)-3-methyl-3-buten-2-on, 2-Undecanon, und 6-Undecanon.

Alle vorgenannten Riechstoffe sind alleine oder in Mischung gemäß der vorliegenden Erfindung mit den bereits genannten Vorteilen einsetzbar.

Insbesondere ist es vorteilhaft, wenn das in der erfindungsgemäßen PIT-Emulsion enthaltene Parfümöl Duftstoffvorläufer enthält. Überraschenderweise wurde festgestellt, daß deren Wirkung bei der erfindungsgemäßen Trockneranwendung noch weiter verstärkt wird bzw. über die bisher mit ihnen erzielbaren Erfolge noch weiter hinausgeht.

Ein Duftstoffvorläufer ist eine Verbindung, welche durch das Aufbrechen einer chemischen Bindung, beispielsweise durch Hydrolyse, ein erwünschtes Geruchs- und/oder Duftstoffmolekuel freisetzt. Typischerweise wird zur Bildung eines Duftstoffvorläufers ein gewünschtes Duftstoffrohmaterial chemisch mit einem Träger, vorzugsweise einem geringfügig flüchtigen oder mäßig flüchtigen Träger, verbunden. Die Kombination führt zu einem weniger flüchtigen und stärker hydrophoben Duftstoffvorläufer mit verbesserter Anlagerung auf Stoffen. Der Duftstoff wird danach durch Aufbrechen der Bindung zwischen dem Duftstoffrohmaterial und dem Träger freigesetzt, beispielsweise durch eine Veränderung des pH-Werts (z.B. durch Transpiration beim Tragen), Luftfeuchtigkeit, Wärme und/oder Sonnenlicht während der Lagerung oder des Trocknens auf der Wäscheleine.

Das Duftstoffrohmaterial für Verwendung in Duftstoffvorläufern sind typischerweise gesättigte oder ungesättigte, flüchtige Verbindungen, die einen Alkohol, einen Aldehyd und/oder eine Ketongruppe enthalten. Zu den hierin nützlichen Duftstoffrohmaterialien gehören jegliche wohlriechenden Substanzen oder Mischungen von Substanzen.

Besondere vorteilhafte, erfindungsgemäß einsetzbare Duftstoffvorläufer gehorchen der Formel

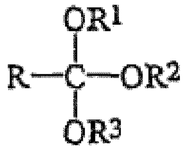

,

worin R Wasserstoff, lineares C1-C8-Alkyl, verzweigtes C3-C20-Alkyl, cyclisches C3-C20-Alkyl, verzweigtes cyclisches C6-C20-Alkyl, lineares C6-C20-Alkenyl, verzweigtes C6-C20-Alkenyl, cyclisches C6-C20-Alkenyl, verzweigtes cyclisches C6-C20-Alkenyl, substituiertes oder unsubstituiertes C6-C20-Aryl und Mischungen hiervon bedeutet; R1, R2 und R3 unabhängig lineares, verzweigtes oder substituiertes C1-C20-Alkyl; lineares, verzweigtes oder substituiertes C2-C20-Alkenyl; substituiertes oder unsubstituiertes, cyclisches C3-C20-Alkyl; substituiertes oder unsubstiuiertes C6-C20-Aryl, substituiertes oder unsubstituiertes C2-C40-Alkylenoxy; substituiertes oder unsubstituiertes C3-C40-Alkylenoxyalkyl; substituiertes oder unsubstituiertes C6-C40-Alkylenaryl; substituiertes oder unsubstituiertes C6-C32-Aryloxy; substituiertes oder unsubstituiertes C6-C40-Alkylenoxyaryl; C6-C40-Oxyalky-Ienaryl und Mischungen hiervon bedeuten. Der Einsatz solcher Substanzen entspricht einer bevorzugten Ausführungsform der Erfindung.

Eine bevorzugte Ausführungsform liegt vor, wenn der erfindungsgemäß einsetzbare Duftstoffvorläufer Verbindungen freisetzt, gehorchend der Formel

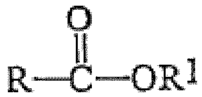

,

worin R Wasserstoff, Methyl, Ethyl, Phenyl und Mischungen hiervon ist; R1 gewählt ist aus der Gruppe, bestehend aus 4-(1-Methylethyl)cyclohexanmethyl, 2,4-Dimethyl-3-cyclohexen-1-ylmethyl, 2,4-Dimethylcyclo-hex-1-ylmethyl, 2,4,6-Trimethyl-3-cyclohexen-1-ylmethyl, 2-Phenylethyl, 1-(4-Isopropylcyclohexyl)ethyl, 2,2-Dimethyl-3-(3-methylphenyl)propan-1-yl, 3-Phenyl-2-propen-1-yl, 2-Methyl-4-(2,2,3-trimethyl-3-cyclopen-ten-1-yl)-2-buten-1-yl, 3-Methyl-5-phenylpentan-1-yl, 3-Methyl-5-(2,2,3-trimethyl-3-cyclopenten-1-yl)-4-pen-ten-2-yl, 2-Methyl-4-phenylpentan-1-yl, cis-3-Hexen-1-yl, 3,7-Dimethyl-6-octen-1-yl, 3,7-Dimethyl-2,6-octadi-en-1-yl, 7-Methoxy-3,7-dimethyloctan-2-yl, 6,8-Dimethylnonan-2-yl, cis-6-Nonen-1-yl, 2,6-Nonadien-1-yl, 4-Methyl-3-decen-5-yl, Benzyl, 2-Methoxy-4-(1-propenyl)phenyl,2-Methoxy-4-(2-propenyl)phenyl und Mischungen hiervon. Der Einsatz solcher Substanzen entspricht einer bevorzugten Ausführungsform der Erfindung.

Weitere besonders vorteilhafte, erfindungsgemäß einsetzbare Duftstoffvorläufer, sind Acetale oder Ketale, vorzugsweise gehorchend der Formel

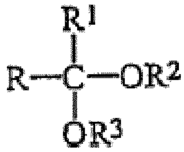

,

worin R lineares C1-C20-Alkyl, verzweigtes C3-C20-Alcyl, cyclisches C6-C20-Alkyl, verzweigtes cyclisches C6-C20-Alkyl, lineares C2-C20-Alkenyl, verzweigtes C3-C20-Alkenyl, cyclisches C6-C20-Alkenyl, verzweigtes cyc-lisches C6-C20-Alkenyl, substituiertes oder unsubstituiertes C6-C20-Aryl und Mischungen hiervon ist; R1 Wasser-stoff oder R ist; R2 und R3 jeweils unabhängig voneinander gewählt sind aus der Gruppe, bestehend aus line-ares C1-C20-Alkyl, verzweigtes C3-C20-Alkyl, cyclisches C3-C20-Alkyl, verzweigtes cyclisches C6-C20-Alkyl, line-ares C6-C20-Alkenyl, verzweigtes C6-C20-Alkenyl, cyclisches C6-C20-Alkenyl, verzweigtes cyclisches C6-C20-Al-kenyl, C6-C20-Aryl, substituiertes C7-C20-Aryl und Mischungen hiervon. Der Einsatz solcher Substanzen entspricht einer bevorzugten Ausführungsform der Erfindung.

Weitere besonders vorteilhafte, erfindungsgemäß einsetzbare Duftstoffvorläufer gehorchen der Formel

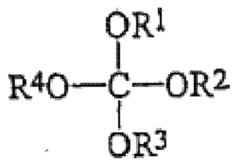

,

worin R1, R2, R3 und R4 unabhängig voneinander lineares, verzweigtes oder substituiertes C1-C20-Alkyl; linea-res, verzweigtes oder subsituiertes C2-C20-Alkenyl; substituiertes oder unsubstituiertes, cyclisches C5-C20-Al-kyl; substituiertes oder unsubstituiertes C6-C20-Aryl, substituiertes oder unsubstituiertes C2-C40-Alkylenoxy; substituiertes oder unsubstituiertes C3-C40-Alkylenoxyalkyl; substituiertes oder unsubstituiertes C6-C40-Alkylenaryl; substituiertes oder unsubstituiertes C6-C32-Aryloxy; substituiertes oder unsubstituiertes C6-C40-Alkylen-oxyaryl; C6-C40-Oxyalkylenaryl; und Mischungen hiervon sind. Der Einsatz solcher Substanzen entspricht einer bevorzugten Ausführungsform der Erfindung.

Besonders geeignet Duftstoffvorläufer sind Reaktionsprodukte von Verbindungen, die mindestens eine primäre und/oder sekundäre Amingruppe umfassen, beispielsweise einem aminofunktionellen Polymer, insbesondere einem aminofunktionellen Silikon, und einem Duftstoffbestandteil, der aus Keton, Aldehyd und Mischungen davon ausgewählt ist. Der Einsatz solcher Substanzen entspricht einer bevorzugten Ausführungsform der Erfindung.

Das enthaltene Parfümöl besteht zu mindestens 5 Gew.-% aus Riechstoffe mit einem Siedepunkt über 250 °C und einem logP-Wert von > 3,0. Der Einsatz solcher Riechstoffe ermöglicht eine noch weitere Verbesserung der Duftwirkung, was Gefallen, Intensität und Dauerhaftigkeit des Dufteindruckes anbetrifft.

Das enthaltene Parfümöl besteht zu mindestens 5 Gew.-%, bevorzugt 10 oder 15 Gew.-% aus Riechstoffen mit einem Siedepunkt über 250 °C und einem logP-Wert von > 3,0. Es hat sich gezeigt, dass erfindungsgemäße PIT-Emulsionen, welche solche Mindestmengen an Riechstoffen mit einem Siedepunkt über 250 °C und einem logP-Wert von ≥ 3,0 enthalten, besonders vorteilhafte Dufteigenschaften aufweisen. Beispielsweise kann ein noch länger anhaltender Dufteindruck auf der Wäsche erzielt werden. Ebenso kann das Aufziehverhalten der Riechstoffe im Trockner auf die Wäsche noch weiter verbessert werden, so dass die Wäsche noch länger und noch intensiver riecht.

Der Octanol/Wasser-Verteilungskoeffizient eines Duftstoff-Bestandteils ist das Verhältnis zwischen seiner Gleichgewichtskonzentration in Octanol und in Wasser. Da die Verteilungskoeffizienten der Duftstoffbestandteile oft hohe Werte haben, z.B. 1000 oder höher, werden sie zweckmäßiger in der Form ihres Logarithmus zur Basis 10 angegeben, man spricht dann vom so genannten log-P-Wert. Bevorzugte Riechstoffe dieser Erfindung weisen einen logP von ≥ 3,0 oder höher auf, z.B. von ≥ 3,1, vorzugsweise ≥ 3,2, insbesondere ≥ 3,3.

Der logP-Wert zahlreicher Riechstoffe ist dokumentiert; zum Beispiel enthält die Pomona92-Datenbank, verfügbar von Daylight Chemical Information Systems, Inc., (Daylight CIS), Irvine, Kalifornien, zahlreiche logP-Werte, zusammen mit Zitaten zur Originalliteratur. Jedoch werden die logP-Werte am zweckmäßigsten durch das "CLOGP"-Programm, das auch von Daylight CIS verfügbar ist, berechnet. Dieses Programm führt auch die experimentellen logP-Werte auf, wenn sie in der Pomona92-Datenbank verfügbar sind. Der "errechnete logP" (ClogP-Wert) wird durch die Fragmentannäherung nach Harsch und Leo (siehe A. Leo, in Comprehensive Medicinal Chemistry, Bd. 4, C. Harsch, P. G. Sammens, J. B. Taylor und C. A. Ransden, Hrsg., S. 295, Pergamon Press, 1990, hierin durch den Bezug eingeschlossen). Die Fragmentannäherung basiert auf der chemischen Struktur jedes der Duftstoffbestandteile und berücksichtigt die Zahlen und Typen von Atomen, die Atombindungsfähigkeit und die chemische Bindung. Die ClogP-Werte, welches die zuverlässigsten und am verbreitesten verwendeten Schätzwerte für diese physikochemische Eigenschaft sind, werden im Rahmen dieser Erfindung vorzugsweise an Stelle der experimentellen logP-Werte bei der Auswahl der Duftstoffbestandteile verwendet, die in der vorliegenden Erfindung nützlich sind.

Die Siedepunkte zahlreicher Riechstoffe sind z.B. in "Perfume and Flavor Chemicals (Aroma Chemicals)", S. Arctander, veröffentlicht durch den Autor 1969, angegeben.

Andere Siedepunktwerte können z.B. von verschiedenen, bekannten Chemiehandbüchern und Datenbanken erhalten werden. Wenn ein Siedepunkt nur bei einem unterschiedlichen Druck angegeben ist, in der Regel einem niedrigeren Druck als dem Normaldruck von 760 mm Hg, kann der Siedepunkt bei Normaldruck ungefähr mit Hilfe der Siedepunkt-Druck-Nomographen, wie die in "The Chemist's Companion", A. J. Gordon und R. A. Ford, John Wiley & Sons Publishers, 1972, S. 30-36, angegebenen, geschätzt werden. Wo anwendbar, können die Siedepunktwerte auch durch Computerprogramme errechnet werden, basierend auf den Molekülstrukturdaten, wie jenen, die beschrieben sind in "Computer-assisted Prediction of Normal Boiling Points of Pyrans and Pynoles", D. T. Starton et al., J. Chem. Inf. Comput. Sci., 32 (1992), SS. 306-316, "Computer-assisted Prediction of Normal Boiling Points of Furans, Tetrahydrofurans, and Thiophenes" (Computergestützte Vorhersage der normalen Siedeopunkte von Furanen, Tetrahydrofuranen und Thiophenen), D. T. Starton et al., J. Chem. Inf. Comput. Sci., 31 (1992), SS. 301-310, und den darin zitierten Referenzen, und "Predicting Physical Properties from Molecular Structure", R. Murugan et al., Chemtech. Juni 1994, S. 17-23. Alle oben genannten Veröffentlichungen sind durch den Bezug eingeschlossen.

Im folgenden werden in Tabelle 1 einige Riechstoffe beispielhaft aufgeführt, welche die Kriterien Siedepunkt > 250 °C und ClogP ≥ 3 erfüllen. Solche Riechstoffe, welche diese Kriterien erfüllen, werden im weiteren Verlauf auch als beständige Riechstoffe bezeichnet.

Tabelle 1: Beispiele für beständige Riechstoffe

| Duftstoffbestandteile | Ungefähr Siedepunkt (°C) | ClogP |
|---|---|---|
| Siedepunkt > 250°C und ClogP ≥ 3,0 | | |
| Allylcylclohexanpropionat | 267 | 3,935 |
| Ambrettolid | 300 | 6,261 |
| Amylbenzoat | 262 | 3,417 |
| Amylcinnamat | 310 | 3,771 |
| Amylzimtaldehyd | 285 | 4,324 |
| Amylzimtaldehyddimethylacetal | 300 | 4,033 |
| iso-Amylsalicylat | 277 | 4,601 |
| Aurantiol | 450 | 4,216 |
| Benzophenon | 306 | 3,120 |
| Benzylsalicylat | 300 | 4,383 |
| para-tert-Butylcyclohexylacetat | >250 | 4,019 |
| iso-Butylchinolin | 252 | 4,193 |
| beta-Caryophyllen | 256 | 6,333 |
| Cardinen | 275 | 7,346 |
| Cedrol | 291 | 4,530 |
| Cedrylacetat | 303 | 5,436 |
| Cedrylformiat | >250 | 5,070 |
| Cinnamylcinnamat | 370 | 5,480 |
| Cyclohexylsalicylat | 304 | 5,265 |
| Cyclamenaldehyd | 270 | 3,680 |
| Dihydroisojasmonat | >300 | 3,009 |
| Diphenylmethan | 262 | 4,059 |
| Diphenyloxid | 252 | 4,240 |
| Dodecanlacton | 258 | 4,359 |
| iso E super | >250 | 3,455 |
| Ethylbrassylat | 3321 | 4,554 |
| Ethylmethylphenylglycidat | 260 | 3,165 |
| Ethylundecylenat | 264 | 4,888 |
| Exaltolid | 280 | 5,346 |
| Galaxolid | >250 | 5,482 |
| Geranylanthranilat | 312 | 4,216 |
| Geranylphenylacetat | >250 | 5,233 |
| Hexadecanolid | 294 | 6,805 |
| Hexenylsalicylat | 271 | 4,716 |

(fortgesetzt)

| Duftstoffbestandteile | Ungefähr Siedepunkt (°C) | ClogP |
|---|---|---|
| Hexylzimtaldehyd | 305 | 5,473 |
| Hexylsalicylat | 290 | 5,260 |
| alpha-Iron | 250 | 3,820 |
| Lilial (p-t-bucinal) | 258 | 3,858 |
| Linalylbenzoat | 263 | 5,233 |
| 2-Methoxynaphthalin | 274 | 3,235 |
| Methyldihydrojasmon | >300 | 4,843 |
| gamma-n-Methylionen | 252 | 4,309 |
| Moschus-Indanon | >250 | 5,458 |
| Moschus-Keton | FP = 137°C | 3,014 |
| Moschus-Tibetin | FP = 136°C | 3,831 |
| Myristicin | 276 | 3,200 |
| Oxahexadecanolid-10 | >300 | 4,336 |
| Oxahexadecanolid-11 | FP = 35°C | 4,336 |
| Patchoulialkohol | 285 | 4,530 |
| Phantolid | 288 | 5,977 |
| Phenylethylbenzoat | 300 | 4,058 |
| Phenylethylphenylacetat | 325 | 3,767 |
| Phenylheptanol | 261 | 3,478 |
| Phenylhexanol | 258 | 3,299 |
| alpha-Santalol | 301 | 3,800 |
| Thibetolid | 280 | 6,246 |
| delta-Undecalacton | 290 | 3,830 |
| gamma-Undecalacton | 297 | 4,140 |
| Vetiverlyacetat | 285 | 4,882 |
| Yara-yara | 274 | 3,235 |
| FP ist der Schmelzpunkt; diese Bestandteile haben einen Siedepunkt von höher als 250°C. | | |

Diese Tabelle gibt eine hinreichende Anzahl nichteinschränkender Beispiele für beständige Riechstoffe, welche im Rahmen dieser Erfindung bevorzugt einsetzbar sind. Die PIT-Emulsionen der vorliegenden Erfindung enthalten vorzugsweise mindestens 3 unterschiedliche beständige Riechstoffe, stärker bevorzugt mindestens 4 unterschiedliche beständige Riechstoffe, und noch weiter bevorzugt mindestens 5 unterschiedliche beständige Riechstoffe.

Nicht-beständige Riechstoffe sind im Rahmen dieser Erfindung solche Riechstoffe, welche einen Siedepunkt von niedriger als etwa 250°C oder einen ClogP von weniger als etwa 3,0 oder sowohl einen Siedepunkt von weniger als etwa 250°C und einen ClogP von weniger als etwa 3,0 aufweisen. Nach einer bevorzugten Ausführungsform werden nicht-beständige Riechstoffe vorzugsweise in den PIT-Emulsionen der vorliegenden Erfindung minimiert, d.h. die PIT-Emulsionen enthalten vorzugsweise ≤ 60 Gew.-%, ≤ 55 Gew.-%, ≤ 50 Gew.-%, ≤ 45 Gew.-%, ≤ 40 Gew.-%, ≤ 35 Gew.-%, ≤ 30 Gew.-%, ≤25 Gew.-%, ≤ 20 Gew.-%, ≤ 15 Gew.-%, ≤ 10 Gew.-%, ≤ 5 Gew.-%, ≥ Gew.-%, ≥ 2 Gew.-% oder sogar ≥ 1 Gew.-% an nichtbeständigen Riechstoffen, Gew.-% bezogen auf die Gesamtmenge der in der PIT-Emulsion enthaltenen Riechstoffe.

Es kann aber vorteilhaft sein, wenn nicht beständige Riechstoffe zumindest in kleinen Mengen verwendet werden, nämlich zur Verbesserung des Geruchs der PIT-Emulsionen als solchen. Vorzugsweise enthalten die PIT-Emulsionen der vorliegenden Erfindung daher ≥ 1 Gew.-%, vorzugsweise ≥ 5 Gew.-%, stärker bevorzugt ≥ 10 Gew.-%, noch stärker bevorzugt ≥ 15 Gew.-%, insbesondere sogar ≥ 20, ≥ 25 oder sogar ≥ 30 Gew.-%, an nicht beständigen Riechstoffen, Gew.-% bezogen auf die Gesamtmenge der in der PIT-Emulsion enthaltenen Riechstoffe.

Es ist ganz besonders bevorzugt, dass die erfindungsgemäße PIT-Emulsion weiterhin eine Aromatherapiekomponente enthält.

Aromatherapie bezeichnet die Anwendung ätherischer Öle zur Beeinflussung von Gesundheit und Wohlbefinden. Beim erfindungsgemäßen Einsatz der PIT-Emulsionen, umfassend ein ätherisches Öl als Aromatherapiekomponente, gelangen Bestandteile des ätherischen Öles auf die Textilien und können beim Tragen der Textilien Gesundheit und Wohlbefinden positiv beeinflussen. Als Aromatherapiekomponente ist bevorzugt ein ätherisches Öl einsetzbar.

Ätherische Öle werden beispielsweise aus Blumen, Gewürzen, Kräutern, Hölzern oder Fasern extrahiert und sind komplexe Mischungen aus verschiedenen organischen Molekülen wie Terpenen, Ethern, Cumarinen, Estern, Aldehyden, Phenylestern, Monoterpenole, Phenolen, Monoterpenen, Oxiden, Sesquiterpenketonen, Sesquiterpenen und Sesquiterpenolen. Durch ihre kleine Molekularstruktur gelangen ätherische Öle über die Haut und/oder die Schleimhaut in den Blutkreislauf und das Gewebe. Auf diesem Weg können sie den gesamten Organismus beeinflussen.

Eine Vielzahl an ätherischen Ölen kann aromatherapeutisch eingesetzt werden. Hierbei ganz besonders geeignete ätherische Öle umfassen beispielsweise Öle von Abies Sibirica, Amyris Balsamifera, Anis (Illicium Verum), Zitronenmelisse (Melissa Officinalis), Basilikum (Ocimum Basilicum), Pimenta Acris, Bienenbalsam (Monarda Didyma), Bergamotte (Citrus Aurantium Bergamia), Birke (Betula Aba), Bitterorange (Citrus Aurantium Amara), Hibiskus, hundertblättrige Rose (Rosa Centifolia), Calendula Officinalis, Kalifornische Nusseibe (Torreya Californica), Camellia Sinensis, Capsicum Frutescers Oleoresin, Kümmel (Carum Carvi), Kardamon ( Elettaria Cardamomum), Zedernholz (Cedrus Atlantica), Chamaecyparis Obtusa, Kamille (Anthemis Nobilis), Zimt (Cinnamomum Cassia), Zitronengras (Cymbopogon Nardus), Muskatellersalbei (Salvia Sclarea), Nelke (Eugenia Caryophyllus), Koriander (Coriandrum Sativum), Koriandersamen, Cyperus Esculentus, Zypresse (Cupressus Sempervirens), Eucalyptus Citriodora, Eucalyptus Globulus, Fenchel (Foeniculum Vulgare), Gardenia Florida, Geranium Maculatum, Ingwer (Zingiber Officinale), Leindotter (Camelina Sativa), Grapefrucht (Citrus Grandis), Hopfen (Humulus Lupulus), Hypericum Perforatum, Hyptis Suaveolens, Indigo-Strauch (Dalea Spinosa), Jasmin (Jasminum Officinale), Juniperus Communis, Juniperus Virginiana, Labdanum (Cistus Labdaniferus), Lorbeer (Laurus Nobilis), Lavandin (Lavandula Hybrida), Lavendel (Lavandula Angustifolia), Zitrone (Citrus Medica Limonum), Zitronengras (Cymbopogon Schoenanthus), Leptospermum Scoparium, Limette (Citrus Aurantifolia), Linde (Tilia Cordata), Litsea Cubeba, Liebstöckel (Levisticum Officinale), Citrus Nobilis, Massoyrinde, Echte Kamille (Chamomilla Recutita), Marrokanische Kamille, Moschusrose (Rosa Moschata), Myrrhe (Commiphora Myrrha), Myrthe (Myrtus Communis), Picea Excelsa, Muskat (Myristica Fragrans), Olax Dissitiflora, Olibanum, Opoponax, Orange (Citrus Aurantium Dulcis), Palmarosa (Cymbopogon Martini), Petersiliensamen (Carum Petroselinum), Passionsblume (Passiflora Incarnata), Patchouli (Pogcstemon Cablin), Pelargonium Graveolens, Poleiminze (Mentha Pulegium), Pfefferminz (Mentha Piperita), Kiefer (Pinus Palustris), Pinus Pinea, Pinus Pumiho, Pinus Sylvestris, Rosemarin (Rosmarinus Officinalis), Rose, Rosenholz (Aniba Rosseodora), Weinraute (Ruta Graveolens), Salbei (Salvia Officinalis), Sambucus Nigra, Sandelholz (Santalum Album), Sandarak (Callitris Quadrivalvis), Sassafras Officinale, Sisymbrium Ino, Spearmint (Mentha Viridis), Marjoram (Origanum Majorana), Märzveilchen (Viola Odorata), Holzteer, Thuja Occidentalis, Thymian (Thymus Vulgaris), Vetiveria Zizanoides, Wild Minze (Mentha Arvensis), Ximenia Americana, Schafgarbe (Achillea Millefolium), Ylang Ylang (Cananga Odorata) sowie Mischungen daraus.

Die Menge an aromatherapeutisch wirksamen ätherischem Öl in der erfindungsgemäßen PIT-Emulsion kann vorzugsweise von 0,01 bis 25 Gew.-%, insbesondere von 0,1 bis 10 Gew.-% und ganz besonders bevorzugt von 0,5 bis 5 Gew.-% reichen, bezogen auf die gesamte PIT-Emulsion.

Nach einer bevorzugten Ausführungsform der Erfindung sind auch Hautpflegemittel bzw. hautpflegende Aktivstoffe in der erfindungsgemäßen PIT-Emulsion enthalten, insbesondere in Mengen > 0,01 Gew.-%, Gew.-% bezogen auf die gesamte PIT-Emulsion.

Hautpflegende Aktivstoffe (Hautpflegemittel) können insbesondere solche Mittel sein, welche der Haut einen sensorischen Vorteil verleihen, z.B. indem sie Lipide und/oder Feuchthaltefaktoren zuführen. Hautpflegemittel können z.B. Proteine, Aminosäuren, Lecithine, Lipoide, Phosphatide, Pflanzenextrakte, Vitamine sein; ebenso können Fettalkohole, Fettsäuren, Fettsäureester, Wachse, Vaseline, Paraffine als Hautpflegemittel wirken.

Hautpflegende Aktivstoffe sind alle solchen Aktivstoffe die der Haut einen sensorischen und/oder kosmetischen Vorteil verleihen. Hautpflegende Aktivstoffe sind bevorzugt ausgewählt aus den nachfolgenden Substanzen:

a) Wachse wie beispielsweise Carnauba, Spermaceti, Bienenwachs, Lanolin und/oder Derivate derselben und andere.

b) Hydrophobe Pflanzenextrakte

c) Kohlenwasserstoffe wie beispielsweise Squalene und/oder Squalane

d) Höhere Fettsäuren, vorzugsweise solche mit wenigstens 12 Kohlenstoffatomen, beispielsweise Laurinsäure, Stearinsäure, Behensäure, Myristinsäure, Palmitinsäure, Ölsäure, Linolsäure, Linolensäure, Isostearinsäure

und/oder mehrfach ungesättigte Fettsäuren und andere.

e) Höhere Fettalkohole, vorzugsweise solche mit wenigstens 12 Kohlenstoffatomen, beispielsweise Laurylalkohol, Cetylalkohol, Stearylalkohol, Oleylalkohol, Behenylalkohol, Cholesterol und/oder 2-Hexadecanaol und andere.

f) Ester, vorzugsweise solche wie Cetyloctanoate, Lauryllactate, Myristyllactate, Cetyllactate, Isopropylmyristate, Myristylmyristate, Isopropylpalmitate, Isopropyladipate, Butylstearate, Decyloleate, Cholesterolisostearate, Glycerolmonostearate, Glyceroldistearate, Glyceroltristearate, Alkyllactate, Alkylcitrate und/oder Alkyltartrate und andere.

g) Lipide wie beispielsweise Cholesterol, Ceramide und/oder Saccharoseester und andere

h) Vitamine wie beispielsweise die Vitamine A und E, Vitaminalkylester, einschließlich Vitamin C Alkylester und andere.

i) Sonnenschutzmittel

j) Phospholipide

k) Derivate von alpha-Hydroxysäuren

m) Germizide für den kosmetischen Gebrauch, sowohl synthetische wie beispielsweise Salicylsäure und/oder andere als auch natürliche wie beispielsweise Neemöl und/oder andere

n) Silikone, insbesondere Silkonöl

sowie Mischungen jeglicher vorgenannter Komponenten.

Bevorzugt einsetzbare hautpflegende Aktivstoffe sind vorzugsweise auch ätherische Öle, insbesondere ausgewählt aus der Gruppe der Angelica fine - Angelica archangelica, Anis - Pimpinella Anisum, Benzoe siam - Styrax tokinensis, Cabreuva - Myrocarpus fastigiatus, Cajeput - Melaleuca leucadendron, Cistrose - Cistrus ladaniferus, Copaiba-Balsam - Copaifera reticulata, Costuswurzel - Saussurea discolor, Edeltannennadel - Abies alba, Elemi - Canarium luzonicum, Fenchel - Foeniculum dulce Fichtennadel - Picea abies, Geranium - Pelargonium graveolens, Ho-Blätter - Cinnamonum camphora, Immortelle (Strohblume) Helichrysum ang., Ingwer extra - Zingiber off., Johanniskraut - Hypericum perforatum, Jojoba, Kamille deutsch - Matricaria recutita, Kamille blau fine - Matricaria chamomilla, Kamille röm. - Anthemis nobilis, Kamille wild-Ormensis multicaulis, Karotte - Daucus carota, Latschenkiefer - Pinus mugho, Lavandin - Lavendula hybrida, Litsea Cubeba - (May Chang), Manuka - Leptospermum scoparium, Melisse - Melissa officinalis, Meerkiefer - Pinus pinaster" Myrrhe - Commiphora molmol, Myrthe - Myrtus communis, Neem - Azadirachta, Niaouli - (MQV) Melaleuca quin. viridiflora, Palmarosa - Cymbopogom martini, Patchouli - Pogostemon patschuli, Perubalsam - Myroxylon balsamum var. pereirae, Raventsara aromatica, Rosenholz - Aniba rosae odora, Salbei - Salvia officinalis Schachtelhalm - Equisetaceae, Schafgarbe extra - Achillea millefolia, Spitzwegerich - Plantago lanceolata, Styrax - Liquidambar orientalis, Tagetes (Ringelblume) Tagetes patula, Teebaum - Melaleuca alternifolia, Tolubalsam - Myroxylon Balsamum L., Virginia-Zeder - Juniperus virginiana, Weihrauch (Olibanum) - Boswellia carteri, Weißtanne - Abies alba. Der Einsatz von etherischen Ölen entspricht einer bevorzugten Ausführungsform der Erfindung.

Bevorzugte einsetzbare hautpflegende Aktivstoffe sind vorzugsweise auch hautschützende Öle, insbesondere ausgewählt aus der Gruppe Algenöl Oleum Phaeophyceae, Aloe-Vera Öl Aloe vera brasiliana, Aprikosenkernöl Prunus armeniaca, Arnikaöl Arnica montana, Avocadoöl Persea americana, Borretschöl Borago officinalis, Calendulaöl Calendula officinalis, Camelliaöl Camellia oleifera, Distelöl Carthamus tinctorius, Erdnuß-öl Arachis hypogaea, Hanföl Cannabis sativa, Haselnußöl Corylus avellana/, Johanniskrautöl Hypericum perforatum, Jojobaöl Simondsia chinensis, Karottenöl Daucus carota, Kokosöl Cocos nucifera, Kürbiskernöl Curcubita pepo, Kukuinußöl Aleurites moluccana, Macadamianußöl Macadamia ternifolia, Mandelöl Prunus dulcis, Olivenöl Olea europaea, Pfirsichkernöl Prunus persica, Rapsöl Brassica oleifera, Rizinusöl Ricinus communis, Schwarzkümmelöl Nigella sativa, Sesamöl Sesamium indicum, Sonnenblumenöl Helianthus annus, Traubenkernöl Vitis vinifera, Walnußöl Juglans regia, Weizenkeimöl Triticum sativum. Der Einsatz von hautschützenden Ölen entspricht einer bevorzugten Ausführungsform der Erfindung.

Die optional enthaltenen hautpflegenden Aktivstoffe gehen bei einer erfindungsgemäßen Anwendung der PIT-Emulsion im Trockner auf das Textil über und können dann wiederum vom Textil auf die Haut übergehen, wenn das Textil mit der Haut in Kontakt kommt, z.B. beim Tragen von Kleidung. Auf diese Weise gereichen hautpflegende Aktivstoffe in den erfindungsgemäßen PIT-Emulsionen der Haut des Verbrauchers zum Vorteil.

Neben den bereits zuvor genannten Komponenten können die erfindungsgemäße PIT-Emulsion noch weitere Komponenten enthalten. Insbesondere seien in diesem Zusammenhang Grenzflächenmoderatoren aus der Gruppe der Tocopherole, Guerbetalkohole mit 16 bis 20 C-Atomen und der Steroide mit 1 bis 3 OH-Gruppen genannt.

Unter Tocopherolen sind Naturstoffe mit Vitamin E-Charakter zu verstehen, die sich vom 2-Methyl-2-(4'.8'.12'-trimethyltridecyl)-chroman-6-ol, dem sogenannten Tocol, ableiten. Besonders bevorzugt ist $\alpha$-Tocopherol, das am häufigsten vorkommende und technisch bedeutendste Tocopherol, das vielfach auch als das eigentliche Vitamin E bezeichnet wird.

Unter Guerbetalkoholen sind spezielle verzweigte Alkohole zu verstehen, die nach der Guerbet-Reaktion erhältlich sind. Erfindungsgemäß bevorzugt einsetzbaren Guerbetalkohole sollten 16 bis 20 C-Atome aufweisen, wie z.B. 2-Hexyldecanol oder 2-Octyldodecanol. Besonders geeignet ist dabei 2-Octyldodecanol.

Unter Steroiden ist eine Gruppe von natürlich auftretenden oder synthetisch gewonnenen Verbindungen zu

verstehen, denen das Gerüst des (partiell) hydrierten Cyclopenta[a]phenanthrens zugrunde liegt. Erfindungsgemäß bevorzugt einsetzbaren Steroide sollten 1 bis 3 OH-Gruppen aufweisen. Besonders geeignet sind die Sterine, bei denen sich am dritten C-Atom des Steroidgerüstes eine OH-Gruppe befindet. Die Sterine treten in allen tierischen und pflanzlichen Zellen auf. Nach ihrem Vorkommen teilt man sie in Zoosterine, z.B. Cholesterin, und Phytosterine, die vorwiegend in höheren Pflanzen vorkommen, auf. Ein besonders geeignetes Steroid ist Cholesterin.

Im Rahmen der vorliegenden Erfindung können bevorzugte PIT-Emulsionen zusätzlich einen oder mehrere Stoffe aus der Gruppe der Gerüststoffe, Bleichmittel, Bleichaktivatoren, Enzyme, Elektrolyte, nichtwässrigen Lösungsmittel, pH-Stellmittel, Fluoreszenzmittel, Farbstoffe, Hydrotope, Schauminhibitoren, Silikonöle, Antiredepositionsmittel, optischen Aufheller, Vergrauungsinhibitoren, Einlaufverhinderer, Knitterschutzmittel, Farbübertragungsinhibitoren, antimikrobiellen Wirkstoffe, Germizide, Fungizide, Antioxidantien, Konservierungsmittel, Korrosionsinhibitoren, Antistatika, Bittermittel, Bügelhilfsmittel, Phobier- und Imprägniermittel, Quell- und Schiebefestmittel, neutrale Füllsalze sowie UV-Absorber enthalten.

Zur Bekämpfung von Mikroorganismen können die erfindungsgemäßen PIT-Emulsionen antimikrobielle Wirkstoffe enthalten. Hierbei unterscheidet man je nach antimikrobiellem Spektrum und Wirkungsmechanismus zwischen Bakteriostatika und Bakteriziden, Fungistatika und Fungiziden usw. Wichtige Stoffe aus diesen Gruppen sind beispielsweise Benzalkoniumchloride, Alkylarylsulfonate, Halogenphenole und Phenolmercuriacetat, wobei bei den erfindungsgemäßen PIT-Emulsionen auch gänzlich auf diese Verbindungen verzichtet werden kann.

Die erfindungsgemäßen PIT-Emulsionen können Konservierungsmittel enthalten, wobei vorzugsweise nur solche eingesetzt werden, die kein oder nur ein geringes hautsensibilisierendes Potential besitzen. Beispiele sind Sorbinsäure und seine Salze, Benzoesäure und seine Salze, Salicylsäure und seine Salze, Phenoxyethanol, 3-Iodo-2-propynylbutylcarbamat, Natrium N-(hydroxymethyl)glycinat, Biphenyl-2-ol sowie Mischungen davon. Ein geeignetes Konservierungsmittel stellt die lösungsmittelfreie, wässrige Kombination von Diazolidinylharnstoff, Natriumbenzoat und Kaliumsorbat (erhältlich als Euxyl® K 500 ex Schuelke & Mayr) dar, welches in einem pH-Bereich bis 7 eingesetzt werden kann. Insbesondere eignen sich Konservierungsmittel auf Basis von organischen Säuren und/oder deren Salzen zur Konservierung der erfindungsgemäßen PIT-Emulsion. Bei den erfindungsgemäßen PIT-Emulsionen kann auch gänzlich auf diese Verbindungen verzichtet werden kann.

Um unerwünschte, durch Sauerstoffeinwirkung und andere oxidative Prozesse verursachte Veränderungen an den erfindungsgemäßen PIT-Emulsionen und/oder den behandelten textilen Flächengebilden zu verhindern, können die PIT-Emulsionen Antioxidantien enthalten. Zu dieser Verbindungsklasse gehören beispielsweise substituierte Phenole, Hydrochinone, Brenzcatechine und aromatische Amine sowie organische Sulfide, Polysulfide, Dithiocarbamate, Phosphite, Phosphonate und Vitamin E. Bei den erfindungsgemäßen PIT-Emulsionen kann auch gänzlich auf diese Verbindungen verzichtet werden kann.

Ein erhöhter Tragekomfort kann aus der zusätzlichen Verwendung von Antistatika resultieren, die den erfindungsgemäßen PIT-Emulsionen zusätzlich beigefügt werden können. Antistatika vergrößern die Oberflächenleitfähigkeit und ermöglichen damit ein verbessertes Abfließen gebildeter Ladungen. Äußere Antistatika sind in der Regel Substanzen mit wenigstens einem hydrophilen Molekülliganden und geben auf den Oberflächen einen mehr oder minder hygroskopischen Film. Diese zumeist grenzflächenaktiven Antistatika lassen sich in stickstoffhaltige (Amine, Amide, quartäre Ammoniumverbindungen), phosphorhaltige (Phosphorsäureester) und schwefelhaltige (Alkylsulfonate, Alkylsulfate) Antistatika unterteilen. Lauryl- (bzw. Stearyl-)dimethylbenzylammoniumchloride eignen sich als Antistatika für textile Flächengebilde, wobei zusätzlich ein Avivageeffekt erzielt wird. Bei den erfindungsgemäße PIT-Emulsionen kann auch gänzlich auf diese Verbindungen verzichtet werden kann.

Zur Verbesserung der Wiederbenetzbarkeit der behandelten textilen Flächengebilde und zur Erleichterung des Bügelns der behandelten textilen Flächengebilde können in den erfindungsgemäßen PIT-Emulsionen beispielsweise Silikonderivate bzw. Silikonöle eingesetzt werden. Bevorzugte Silikonderivate sind beispielsweise Polydialkyl- oder Alkylarylsiloxane, bei denen die Alkylgruppen ein bis fünf C-Atome aufweisen und ganz oder teilweise fluoriert sind. Bevorzugte Silikone sind Polydimethylsiloxane, die gegebenenfalls derivatisiert sein können und dann aminofunktionell oder quaterniert sind bzw. Si-OH-, Si-H- und/oder Si-Cl-Bindungen aufweisen. Die Viskositäten der bevorzugten Silikone liegen bei 25 °C im Bereich zwischen 100 und 100.000 mPas, wobei die Silikone vorzugsweise in Mengen zwischen 0,2 und 5 Gew.-%, bezogen auf die gesamte PIT-Emulsion eingesetzt werden können. Bei den erfindungsgemäßen PIT-Emulsionen kann auch gänzlich auf diese Verbindungen verzichtet werden kann.

In verschiedenen Ausführungsformen der Erfindung ist die erfindungsgemäße PIT-Emulsion in einem Behälter mit Sprühventil (Sprühdose, Spraydose) enthalten.

Die Flüssigkeit im Behälter kann unter dem Druck eines Treibmittels stehen. Als Treibmittel kommen verflüssigte oder komprimierte Gase in Betracht., wie z.B. Stickstoff, Kohlendioxid oder Distickstoffmonoxid. Insbesondere nicht brennbare Gase sind bevorzugt.

Als Behälter für treibmittelhalige Emulsionen kommen vor allem zylindrische Gefäße aus Metall, (geschütztem bzw. nichtsplitterndem) Glas oder Kunststoff in Frage.

Treibgasfreie, mechanisch zu bedienenden Pumpzerstäuber (Pumpsprays) oder Trigger-Sprays sind jedoch

stärker bevorzugt.

In einer bevorzugten Ausführungsform handelt es sich deshalb bei dem Behälter um ein Pump-Spraybehältnis oder ein Trigger-Spray- Behältnis.

Ein weiterer Gegenstand der vorliegenden Erfindung ist ein Verfahren zur Wäschebeduftung in einem Textiltrocknungsverfahren, bei dem man die zu trocknende Wäsche in einen automatischen (vorzugsweise elektrischen) Wäschetrockner legt und anschließend eine erfindungsgemäße PIT-Emulsion durch Versprühen oder Zerstäuben in den Wäschetrockner einbringt, den Wäschetrockner schließt und das Trocknungsprogramm startet.

Bei diesem Verfahren wird eine sehr gute und überaus lang anhaltende Beduftung von Textilien ermöglicht.

In einer bevorzugten Ausführungsform dieses Verfahrens erfolgt dabei die Zugabe der PIT-Emulsion mittels eines Behälters wie zuvor beschrieben.

Wenn bei dem erfindungsgemäßen Verfahren die Sprühmenge pro Sprühstoß 0,01 bis 5 g, vorzugsweise 0,1 bis 4 g und insbesondere 0,5 bis 3 g beträgt, so liegt wiederum eine bevorzugte Ausführungsform vor. Eine mögliche Obergrenze der Sprühmenge pro Sprühstoß kann auch bei 2 g oder 1 g liegen. Die Obergrenze kann aber auch bei Werten > 5 g liegen, z.B. bei 6 oder 7 g. Eine mögliche Untergrenze der Sprühmenge pro Sprühstoß kann auch bei 1 g oder 2 g liegen.

Ein Vorteil des erfindungsgemäßen Verfahrens liegt darin, daß über die Abluft des automatischen ( vorzugsweise elektrischen) Wäschetrockners außerdem eine Raumbeduftung erfolgt, welche insbesondere für die Zwecke der Aromatherapie genutzt werden kann.

Ein weiterer Gegenstand der vorliegenden Erfindung ist daher ein Verfahren zur Raumbeduftung über ein Textiltrocknungsverfahren, bei dem man die zu trocknende Wäsche in einen automatischen ( vorzugsweise elektrischen) Wäschetrockner legt und anschließend eine erfindungsgemäße PIT-Emulsion durch Versprühen oder Zerstäuben in den Wäschetrockner einbringt, den Wäschetrockner schließt und das Trocknungsprogramm startet, wobei die Abluft des automatischen ( vorzugsweise elektrischen) Wäschetrockners der Raumbeduftung dient.

Ein weiterer Gegenstand ist eine Emulsion gemäß der vorliegenden Erfindung, dadurch gekennzeichnet, dass die Emulsion in einem Behälter mit Sprühventil (Sprühdose, Spraydose) enthalten ist, und dass diese sowie ein flüssiges oder festes Textilwaschmittel in einem Textilreinigungskit enthalten sind. Diese Emulsion wird im Folgenden auch lediglich als KIT-Emulsion bezeichnet. Ferner betrifft die vorliegende Erfindung in einer bevorzugten Ausführungsform diese KIT-Emulsion, dadurch gekennzeichnet, dass es sich bei dem Behälter um ein Pump-Spraybehältnis oder ein Trigger-Spray-Behältnis handelt. Insbesondere ist es vorteilhaft, wenn die im Kit enthaltene PIT-Emulsion Aromatherapiekomponenten umfaßt. Auf diese Weise wird eine Verstärkung des ursprünglichen "Waschmittelgeruchs" (=Geruch, welcher der frisch gewaschenen Wäsche anhaftet) erzeugt. Dies wäre vorteilhaft, da der Verbraucher sich mitunter wünscht, daß der Duft, welcher frisch gewaschener Wäsche anhaftet noch intensiver ist und noch länger vorhält. Dies könnte der Verbraucher nun leicht dadurch erreichen, daß er sich des erfindungsgemäßen Kits bedient. Dies ermöglicht eine Individualisierung der Stärke des Dufterlebens.

In einer weiteren bevorzugten Ausführungsform der KIT-Emulsion ist es vorteilhaft, dass das Textilwaschmittel und die PIT-Emulsion im Wesentlichen unterschiedliche Riechstoffe enthalten. Beispielsweise enthält das Textilwaschmittel eine Riechstoffkomposition, welche beim Verbraucher Assoziationen von "Frische" und "Reinheit" auslösen, wohingegen die PIT-Emulsion eine Riechstoffkomposition enthält, welche beim Verbraucher eine Assoziation von "Pflege" auslöst.

Riechstoffe, welche beim Verbraucher Assoziationen von "Frische" oder "Reinheit" auslösen, wurden bereits weiter oben beschrieben.

In einer weiteren bevorzugten Ausführungsform der KIT-Emulsion ist es vorteilhaft, daß das Textilwaschmittel und die PIT-Emulsion parfümistisch aufeinander abgestimmte Riechstoffe enthalten, welche im Zusammenspiel einen besonders angenehmen Duft entfalten.

Ein weiterer Gegenstand der Erfindung ist Textilbehandlungsverfahren, wobei

a) das zu behandelnde Textil zuerst einer Textilwäsche unter Einsatz eines Waschmittels unterworfen wird, insbesondere in einer automatischen Waschmaschine, und wonach

b) das gewaschene Textil in einen automatischen (vorzugsweise elektrischen) Wäschetrockner gelegt wird und anschließend eine erfindungsgemäße PIT-Emulsion durch Versprühen oder Zerstäuben in den Wäschetrockner eingebracht wird, der Wäschetrockner geschlossen und das Trocknungsprogramm gestartet wird.

Der Vorteil dieses Verfahrens liegt darin, daß eine hervorragende und überaus langanhaltende Textilbeduftung ermöglicht wird. Sowohl Dauerhaftigkeit wie Intensität als auch Gefallen des resultierenden Dufteindruckes sind hervorragend. Die Textilien haben infolge der intensiven, die Fasern auflockernden Bewegungen im Wäschetrockner einen angenehm weichen Griff. Das Verfahren ermöglicht somit sogar Textilbehandlungsverfahren, bei welchen auf eine Anwendung von Textilweichspülern verzichtet werden kann, ohne deren Vorteile einbüßen zu müssen. Denn hinsichtlich des mit Textilweichspülern erzielbaren Dufteindruckes (Gefallen/Intensität/Dauerhaftigkeit) wird die Leistung von Textilweichspülern sogar übertroffen. Das Textilbehandlungsverfahren ist folglich zwar mit, aber auch ohne Einsatz eines Weichspülers möglich. Weichspüler ist die gebräuchliche Bezeichnung für Wäschenachbehandlungsmittel zur Pflege und Konditionierung von Textilien. Sie enthalten textilweichmachende Wirkstoffe wie Kationtenside, insbesondere Esterquats.

Beispiel

PIT-Emulsion "Paradies":

Ölkörper:

10 Gew.-% Parfümöl "Himmelreich"
10 Gew.-% Isopropylmyristat

Niotensid:

4 Gew.-% Eumulgin B 1® (C16-18-Fettalkohol, ethoxyliert (12 EO))
2 Gew.-% Cremophor WO 7® (hydriertes Rizinusöl, ethoxyliert (7 EO))

Co-Emulgator:

1,5 Gew.-% Glycerylmonooleat

Rest:

Wasser

Die PIT-Emulsion "Paradies" wurde nach einem üblichen Verfahren hergestellt. Der PIT-Bereich lag bei 55-62 °C.

Die PIT-Emulsion "Paradies" wurde nun bei der Trocknung von Baumwollwäsche in einem handelsüblichen automatischen Textiltrockner zur Anwendung gebracht. Bei der Baumwollwäsche handelte es sich um 15 Feinripp-Unterhemden aus 100% Baumwolle. Diese wurden zuvor mit einem parfümfreien Waschmittel in einer handelsüblichen Waschmaschine gewaschen. Die gewaschene Baumwollwäsche wurde danach in den Textiltrockner gelegt und anschließend wurden 3,6 g der PIT-Emulsion "Paradies" (enthaltend 0,36 g des Parfümöls "Himmelreich") mit einem Pump-Spray in die Trocknerkammer gesprüht. Danach wurde der Trockner geschlossen und der maschinelle Trocknungsvorgang gestartet.

Zum Vergleich wurden 15 gleiche Feinripp-Unterhemden mit dem gleichen parfümfreien Waschmittel in einer baugleichen handelsüblichen Waschmaschine gewaschen, wobei hier im Spülgang ein üblicher Esterquat-haltiger Weichspüler in üblicher Menge appliziert wurde, der ebenfalls mit dem Parfümöl "Himmelreich" parfümiert war. Die verwendete Menge des Weichspülers enthielt die gleiche Menge Parfümöl "Himmelreich", wie auch in den Trockner eingebracht wurde, nämlich 0,36 g. Anschließend wurde die Wäsche ebenfalls im Trockner, allerdings ohne Zugabe weiterer Mittel, getrocknet, und zwar unter den gleichen Bedingungen wie im erfindungsgemäßen Fall.

Die resultierende Wäsche, zu deren Parfümierung also jeweils die gleiche Menge des Parfümöls "Himmelreich" eingesetzt wurde, wurde schließlich von einem Panel aus 12 parfümistischen Experten beurteilt.

Diese beurteilten den Duft der Wäsche (Intensität und Gefallen) jeweils nach einem Tag und jeweils nach einer Woche. Die Duftbeurteilung wurde jeweils zweimal wiederholt und es wurden jeweils Mittelwerte gebildet.

Zur Beurteilung des Gefallens des Dufteindruckes wurde eine Skala von 1-6 festgelegt (6: hervorragend; 5: sehr angenehm; 4: angenehm; 3: akzeptabel; 2: mangelhaft, 1: ungenügend). Die Experten ermittelten folgende gemittelte Werte:

Erfindungsgemäßes Verfahren; Wäsche nach 1 Tag: 5,2
Erfindungsgemäßes Verfahren; Wäsche nach 1 Woche: 5,5
Vergleichsverfahren; Wäsche nach 1 Tag: 4,7
Vergleichsverfahren; Wäsche nach 1 Woche: 4,5

Fazit für "Gefallen": Das erfindungsgemäße Verfahren führt zu Wäsche mit einem verbesserten Gefallen des Dufteindruckes. Insbesondere nach 1 Woche wurde der Dufteindruck deutlich besser bewertet als beim Vergleichsverfahren. Überraschenderweise verschlechterte sich der Dufteindruck beim erfindungsgemäßen Verfahren nach 1 Woche nicht, sondern wurde sogar leicht besser eingestuft. Dagegen fiel der Dufteindruck beim Vergleichsverfahren weiter ab.

Zur Beurteilung der Intensität des Dufteindruckes wurde eine Skala von 1-5 festgelegt (5: sehr hoch; 4: hoch; 3: akzeptabel; 2: gering, 1: sehr gering).
Die Experten ermittelten folgende gemittelte Werte:

Erfindungsgemäßes Verfahren; Wäsche nach 1 Tag: 4,5
Erfindungsgemäßes Verfahren; Wäsche nach 1 Woche: 4,4
Vergleichsverfahren; Wäsche nach 1 Tag: 4,2
Vergleichsverfahren; Wäsche nach 1 Woche: 3,5

Fazit für "Intensität": Das erfindungsgemäße Verfahren führt zu Wäsche mit einer verbesserten Intensität des Dufteindruckes. Insbesondere nach 1 Woche wurde die Intensität des Dufteindruckes deutlich besser bewertet als beim Vergleichsverfahren. Überraschenderweise verschlechterte sich die Intensität des Dufteindruckes Dufteindruck beim erfindungsgemäßen Verfahren nach 1 Woche nur überaus geringfügig. Die Intensität des Dufteindruckes fiel beim Vergleichsverfahren dagegen deutlich ab.

Insgesamt konnte festgestellt werden, daß der Einsatz der erfindungsgemäßen PIT-Emulsion "Paradies" zu einem verbesserten Dufterlebnis führte, sowohl was die Intensität als auch was das Gefallen des Dufteindrucks anbetraf.

**Patentansprüche**

1. Parfümhaltige PIT-Emulsion (PIT = Phaseninversionstemperatur) zur Textilbeduftung, welche eine Phaseninversionstemperatur im Bereich 35-80 °C aufweist, enthaltend

   a) Niotenside, in Mengen von 0,1-25 Gew.-%, vorzugsweise 1-15 Gew.-%, insbesondere 2-10 Gew.-%,
   b) Coemulgator, in Mengen von 0,1-10 Gew.-%, vorzugsweise 0,1-5 Gew.-%, insbesondere 1-4 Gew.-%,
   c) Parfümöl in Mengen von 5-20 Gew.-%, wobei das Parfümöl zu mindestens 5 Gew.-% aus Riechstoffen mit einem Siedepunkt über 250 °C und einem logP-Wert von ≥ 3 besteht,
   d) Wasser,

   Gew.-% bezogen auf die gesamte PIT-Emulsion.

2. Emulsion nach Anspruch 1, **dadurch gekennzeichnet, dass** ein hautpflegender Aktivstoff enthalten ist.

3. Emulsion nach einem der Ansprüche 1 oder 2, **dadurch gekennzeichnet, dass** Silikonöl enthalten ist.

4. Emulsion nach einem der Ansprüche 1 bis 3, **dadurch gekennzeichnet, dass** eine Aromatherapiekomponente enthalten ist.

5. Emulsion nach einem der Ansprüche 1-4, **dadurch gekennzeichnet, dass** die Emulsion in einem Behälter mit Sprühventil (Sprühdose, Spraydose) enthalten ist.

6. Emulsion nach Anspruch 5, **dadurch gekennzeichnet, dass** es sich bei dem Behälter um ein Pump-Spraybehältnis oder ein Trigger-Spray-Behältnis handelt.

7. Verfahren zur Wäschebeduftung in einem Textiltrocknungsverfahren, **dadurch gekennzeichnet, dass** man die zu trocknende Wäsche in einen automatischen Wäschetrockner legt und anschließend eine PIT-Emulsion nach einem der Ansprüche 1-6 durch Versprühen oder Zerstäuben in den Wäschetrockner einbringt, den Wäschetrockner schließt und das Trocknungsprogramm startet.

8. Verfahren nach Anspruch 7, **dadurch gekennzeichnet, dass** die Zugabe der PIT-Emulsion mittels eines Behälters mit Sprühventil (Sprühdose, Spraydose), insbesondere eines Pump-spraybehältnis oder eines Trigger-Spray-Behältnis, erfolgt.

9. Verfahren nach einem der Ansprüche 7 oder 8, **dadurch gekennzeichnet, dass** die Sprühmenge pro Sprühstoß 0,01 bis 5 g, vorzugsweise 0,1 bis 4 g und insbesondere 0,5 bis 3 g beträgt.

**10.** Verfahren zur Raumbeduftung über ein Textiltrocknungsverfahren, bei dem man die zu trocknende Wäsche in einen automatischen Wäschetrockner legt und anschließend eine PIT-Emulsion nach einem der Ansprüche 1-4 durch Versprühen oder Zerstäuben in den Wäschetrockner einbringt, den Wäschetrockner schließt und das Trocknungsprogramm startet, wobei die Abluft des automatischen Wäschetrockners der Raumbeduftung dient.

**11.** Textilbehandlungsverfahren, wobei

a) das zu behandelnde Textil zuerst einer Textilwäsche unter Einsatz eines Waschmittels unterworfen wird, insbesondere in einer automatischen Waschmaschine, und wonach
b) das gewaschene Textil in einen automatischen, vorzugsweise elektrischen, Wäschetrockner gelegt wird und anschließend eine PIT-Emulsion nach einem der Ansprüche 1-4 durch Versprühen oder Zerstäuben in den Wäschetrockner eingebracht wird, der Wäschetrockner geschlossen und das Trocknungsprogramm gestartet wird.

**12.** Emulsion nach einem der Ansprüche 1 bis 4, **dadurch gekennzeichnet, dass** die Emulsion in einem Behälter mit Sprühventil (Sprühdose, Spraydose) enthalten ist, und dass diese sowie ein flüssiges oder festes Textilwaschmittel in einem Textilreinigungskit enthalten sind.

**13.** Emulsion nach Anspruch 12, **dadurch gekennzeichnet, dass** es sich bei dem Behälter um ein Pump-Spraybehältnis oder ein Trigger-Spray-Behältnis handelt.

**14.** Emulsion nach Anspruch 12 oder 13, **dadurch gekennzeichnet, dass** das Textilwaschmittel und die PIT-Emulsion im Wesentlichen unterschiedliche Riechstoffe enthalten.

## Claims

**1.** A perfume-containing PIT emulsion (PIT = phase inversion temperature) for fragrancing textiles, which has a phase inversion temperature in the range of 35-80 °C, containing

a) non-ionic surfactants, in amounts of 0.1-25 wt.%, preferably 1-15 wt.%, in particular 2-10 wt.%,
b) co-emulsifier, in amounts of 0.1-10 wt.%, preferably 0.1-5 wt.%, in particular 1-4 wt.%,
c) perfume oil in amounts of 5-20 wt.%, wherein the perfume oil is composed of at least 5 wt.% odorants having a boiling point of over 250 °C and a logP value of $\geq 3$,
d) water,

wt.% based on the total PIT emulsion.

**2.** The emulsion according to claim 1, **characterized in that** a skin care active substance is contained.

**3.** The emulsion according to one of claims 1 or 2, **characterized in that** silicone oil is contained.

**4.** The emulsion according to one of claims 1 to 3, **characterized in that** an aromatherapy component is contained.

**5.** The emulsion according to one of claims 1 to 4, **characterized in that** the emulsion is contained in a container comprising a spray valve (spray can).

**6.** The emulsion according to claim 5, **characterized in that** the container is a pump-spray container or a trigger-spray container.

**7.** A method for fragrancing laundry in a textile-drying method, **characterized in that** the laundry to be dried is placed in an automatic tumble dryer and subsequently a PIT emulsion according to one of claims 1 to 6 is introduced into the tumble dryer by means of spraying or atomization, the tumble dryer is closed and the drying program is started.

**8.** The method according to claim 7, **characterized in that** the PIT emulsion is added by means of a container comprising a spray valve (spray can), in particular a pump-spray container or a trigger-spray container.

**9.** The method according to one of claims 7 or 8, **characterized in that** the spray amount per spray action is 0.01 to

5 g, preferably 0.1 to 4 g and in particular 0.5 to 3 g.

**10.** A method for fragrancing a room by means of a textile-drying method, in which the laundry to be dried is placed in an automatic tumble dryer and subsequently a PIT emulsion according to one of claims 1 to 4 is introduced into the tumble dryer by means of spraying or atomization, the tumble dryer is closed and the drying program is started, wherein the exhaust air from the automatic tumble dryer is used to fragrance the room.

**11.** Textile treatment method, wherein

a) the textile to be treated is firstly subjected to a textile-washing process using a washing agent, in particular in an automatic washing machine, and after which
b) the washed textile is placed in an automatic, preferably electric, tumble dryer and subsequently a PIT emulsion according to one of claims 1 to 4 is introduced into the tumble dryer by means of spraying or atomization, the tumble dryer is closed and the drying program is started.

**12.** The emulsion according to one of claims 1 to 4, **characterized in that** the emulsion is contained in a container comprising a spray valve (spray can), and **in that** said emulsion and a liquid or solid textile-washing agent are contained in a textile-cleaning kit.

**13.** The emulsion according to claim 12, **characterized in that** the container is a pump-spray container or a trigger-spray container.

**14.** The emulsion according to claim 12 or 13, **characterized in that** the textile-washing agent and the PIT emulsion contain substantially different odorants.

## Revendications

**1.** Émulsion PIT (PIT = température d'inversion de phase) contenant du parfum destinée à parfumer des textiles, laquelle présente une température d'inversion de phase comprise entre 35 et 80 °C, contenant

a) des tensioactifs non ioniques, en une quantité de 0,1 à 25 % en poids, de préférence de 1 à 15 % en poids, en particulier de 2 à 10 % en poids,
b) un co-émulsifiant, en une quantité de 0,1 à 10 % en poids, de préférence de 0,1 à 5 % en poids, en particulier de 1 à 4 % en poids,
c) une huile de parfum en une quantité de 5 à 20 % en poids, l'huile de parfum étant constituée d'au moins 5 % en poids de matières odorantes comportant un point d'ébullition supérieur à 250 °C et une valeur logP ≥ 3,
d) de l'eau,

en % en poids par rapport à l'émulsion PIT totale.

**2.** Émulsion selon la revendication 1, **caractérisée en ce qu'**elle contient une substance active de soin pour la peau.

**3.** Émulsion selon l'une des revendications 1 ou 2, **caractérisée en ce qu'**elle contient de l'huile de silicone.

**4.** Émulsion selon l'une quelconque des revendications 1 à 3, **caractérisée en ce qu'**elle contient un constituant d'aromathérapie.

**5.** Émulsion selon l'une des revendications 1 à 4, **caractérisée en ce que** l'émulsion est contenue dans un récipient comportant une valve de pulvérisation (pulvérisateur, aérosol).

**6.** Émulsion selon la revendication 5, **caractérisée en ce que** le récipient est constitué d'un pulvérisateur à pompe ou d'un pulvérisateur à gâchette.

**7.** Procédé destiné au parfumage du linge dans un procédé de séchage des textiles, **caractérisé en ce que** le linge à sécher est placé dans un sèche-linge automatique puis une émulsion PIT selon l'une des revendications 1 à 6 est introduite dans le sèche-linge par pulvérisation par ou atomisation, le sèche-linge se ferme et le programme de séchage démarre.

8. Procédé selon la revendication 7, **caractérisé en ce que** l'émulsion PIT est ajoutée au moyen d'un récipient comportant une valve de pulvérisation (pulvérisateur, aérosol), en particulier un pulvérisateur à pompe ou un pulvérisateur à gâchette.

9. Procédé selon l'une des revendications 7 ou 8, **caractérisé en ce que** la quantité de pulvérisation par impulsion de pulvérisation est de 0,01 à 5 g, de préférence de 0,1 à 4 g et en particulier de 0,5 à 3 g.

10. Procédé destiné au parfumage d'ambiance par l'intermédiaire d'un procédé de séchage des textiles, dans lequel le linge à sécher est placé dans un sèche-linge automatique puis une émulsion PIT selon l'une des revendications 1 à 4 est introduite dans le sèche-linge par pulvérisation ou par atomisation, le sèche-linge se ferme et le programme de séchage démarre, l'air extrait du sèche-linge automatique étant utilisé pour parfumer l'espace ambiant.

11. Procédé de traitement des textiles, dans lequel

a) le textile à traiter est d'abord soumis à un lavage de textile à l'aide d'un détergent, en particulier dans une machine à laver automatique, et ensuite
b) le textile lavé est placé dans un sèche-linge automatique, de préférence électrique, puis une émulsion PIT selon l'une des revendications 1 à 4 est introduite dans le sèche-linge par pulvérisation ou par atomisation, le sèche-linge est fermé et le programme de séchage démarre.

12. Émulsion selon l'une des revendications 1 à 4, **caractérisée en ce que** l'émulsion est contenue dans un récipient comportant une valve de pulvérisation (pulvérisateur, aérosol), et **en ce que** celle-ci ainsi qu'un détergent pour textiles liquide ou solide sont contenus dans un kit de nettoyage des textiles.

13. Émulsion selon la revendication 12, **caractérisée en ce que** le récipient est un pulvérisateur à pompe ou un pulvérisateur à gâchette.

14. Émulsion selon la revendication 12 ou 13, **caractérisée en ce que** le détergent pour textiles et l'émulsion PIT contiennent des parfums sensiblement différents.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19548016 A


### In der Beschreibung aufgeführte Nicht-Patentliteratur


- *Angew. Chem.,* 1985, vol. 97, 655-669
- *Adv. Collold Interface Sci,* 1995, vol. 58, 119-149
- **A. LEO.** Comprehensive Medicinal Chemistry. Pergamon Press, 1990, vol. 4, 295
- **S. ARCTANDER.** *Perfume and Flavor Chemicals (Aroma Chemicals),* 1969
- **A. J. GORDON ; R. A. FORD.** The Chemist's Companion. John Wiley & Sons Publishers, 1972, 30-36
- **D. T. STARTON et al.** Computer-assisted Prediction of Normal Boiling Points of Pyrans and Pynoles. *J. Chem. Inf. Comput. Sci.,* 1992, vol. 32, 306-316
- **D. T. STARTON et al.** *J. Chem. Inf. Comput. Sci.,* 1992, vol. 31, 301-310
- **R. MURUGAN et al.** Predicting Physical Properties from Molecular Structure. *Chemtech,* Juni 1994, 17-23